# EUROPEAN PATENT APPLICATION

(11) **EP 2 112 812 A2**
(43) Date of publication of application: **28.10.2009**
(21) Application number: 09004602.0
(22) Date of filing: 30.03.2009
(51) Int. Cl.: H04M 3/46

(54) **Parallel call to telephones near called party**

(30) Priority: 23.04.2008 JP 2008112514
(71) Applicant: Nec Corporation, Tokyo 108-8001 (JP)
(72) Inventor: Matsui, Junichiro, Tokyo 108-8001 (JP); Takagi, Kazuo, Tokyo 108-8001 (JP); Tani, Hideaki, Tokyo 108-8001 (JP)
(74) Representative: Glawe, Delfs, Moll

(57) **Abstract**

A telephone system includes a positional information storage for storing positional information of telephone terminals, a determiner for being notified of a called telephone terminal by a telephone exchange which has received a call from a calling telephone terminal, and for determining whether or not the called telephone terminal is present in a particular area, and an indicator for, if the called telephone terminal is present in the particular area, retrieving a telephone terminal which is present in a predetermined range based on the called telephone terminal, as a neighboring telephone terminal, and indicating the retrieved telephone terminal to the telephone exchange. The telephone exchange includes a connection requester for sending a connection request signal to another telephone exchange, to request that a connection be made between the called telephone terminal and the neighboring telephone terminal, and a caller for receiving a connection request signal from another telephone exchange and for sending a call signal to a telephone terminal concerning which a request that a connection be established is made by the connection request signal.

## Description

This application is based upon and claims the benefit of priority from Japanese patent application No. 2008-112514, filed on April 23 2008, the disclosure of which is incorporated herein in its entirety by reference.

### BACKGROUND OF THE INVENTION

### 1. Field of the Invention:

The present invention relates to a telephone system, a positional information server, a telephone exchange, and a method of controlling a telephone system.

### 2. Description of the Related Art:

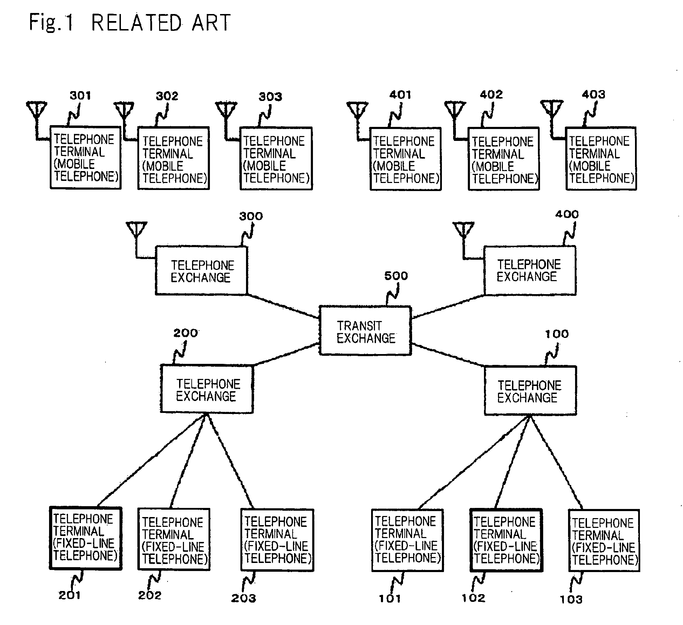

Fig. 1 of the accompanying drawings is a block diagram showing an example of the configuration of a general telephone system. The telephone system shown in Fig. 1 is disclosed in JP-A No. 5-236123 and JP-A No. 5-236093, for example.

As shown in Fig. 1, the telephone system includes a telephone exchange network comprising a plurality of telephone exchanges 100, 200, 300, 400 and transit exchange 500 interconnecting telephone exchanges 100, 200, 300, 400.

Telephone exchanges 100, 200, 300, 400 accommodate telephone terminals such as fixed-line telephones and mobile telephones. In Fig. 1, telephone exchange 100 accommodates telephone terminals 101, 102, 103 as fixed-line telephones. Telephone exchange 200 accommodates telephone terminals 201, 202, 203 as fixed-line telephones. Telephone exchange 300 accommodates telephone terminals 301, 302, 303 as mobile telephones. Telephone exchange 400 accommodates telephone terminals 401, 402, 403 as mobile telephones. Each of telephone exchanges 300, 400 also has a function as a mobile telephone base station. The telephone terminals and the telephone exchanges may perform wired or wireless communications therebetween.

Telephone exchanges 100, 200, 300, 400 and transit exchange 500 send and receive various signals including connection request signals and call signals via a signal network.

When a telephone terminal tries to call another telephone terminal, telephone exchanges 100, 200, 300, 400 and transit exchange 500 establish a communication line between the calling telephone terminal and the called telephone terminal. The telephone terminals send and receive call speech signals via the established communication line.

Operation of the telephone system shown in Fig. 1 will be described below.

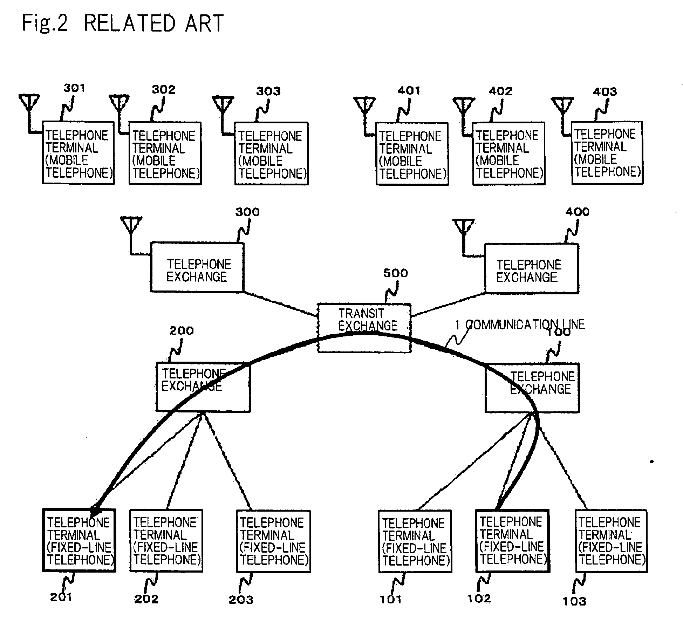

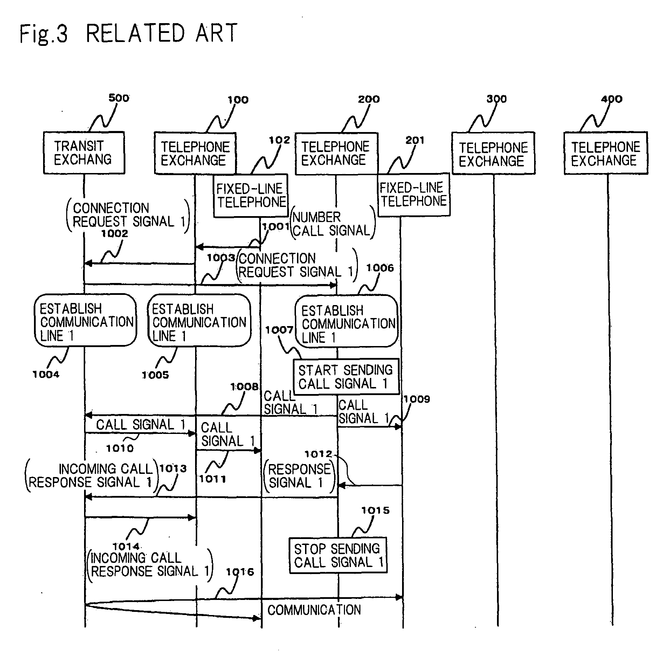

It is assumed that, as shown in Fig. 2 of the accompanying drawings, telephone terminal 102 makes a telephone call to telephone terminal 201. Operation of the telephone system for completing such a telephone call will be described below with reference to Fig. 3 of the accompanying drawings.

As shown in Fig. 3, when the user operates telephone terminal 102 to make a call specifying the telephone number of telephone terminal 201, telephone terminal 102 sends a number call signal including the telephone number of telephone terminal 201 to telephone exchange 100 in step 1001.

When telephone exchange 100 receives the number call signal from telephone terminal 102, telephone exchange 100 sends a connection request signal for requesting a connection to telephone terminal 201 to transit exchange 500 in step 1002. The connection request signal includes the telephone number of telephone terminal 201 to which telephone terminal 102 has made a request to be connected.

Signals and a communication line which are involved in the connection between telephone terminal 102 and telephone terminal 201 will hereafter be assigned a suffix "1".

When transit exchange 500 receives connection request signal 1 from telephone exchange 100, transit exchange 500 determines telephone exchange 200 which accommodates telephone terminal 201 based on the telephone number of telephone terminal 201 which is included in connection request signal 1, and transfers connection request signal 1 to telephone exchange 200 in step 1003.

When telephone exchange 200 receives connection request signal 1 from transit exchange 500, telephone exchange 200 ascertains whether telephone terminal 201 is capable of receiving the call or not, i.e., whether telephone terminal 201 is idle or not.

While transit exchange 500 and telephone exchanges 100, 200 are routing connection request signal 1 they establish communication line 1 between telephone exchanges 100, 200 for connecting telephone terminal 102 and telephone terminal 201 to each other in steps 1004, 1005, 1006.

If telephone terminal 201 is idle, then telephone exchange 200 sends call signal 1 to telephone terminal 201 and also sends call signal 1 to telephone terminal 102 via transit exchange 500 and telephone exchange 100 in steps 1008, 1009, 1010, 1011.

When an action to respond call signal 1 is performed on telephone terminal 201, i.e., when the handset of telephone terminal 201 is picked up, telephone terminal 201 sends response signal 1 to telephone exchange 200 in step 1012.

When telephone exchange 200 receives response signal 1 from telephone terminal 201, telephone exchange 200 sends incoming call response signal 1 indicating that telephone terminal 201 has responded, to transit exchange 500 in step 1013.

At this time, telephone exchange 200 stops sending call signal 1 to telephone terminals 102, 201 in step 1015, and connects telephone terminal 201 to communication line 1.

When transit exchange 500 receives incoming call response signal 1 from telephone exchange 200, transit exchange 500 transfers incoming call response signal 1 to telephone exchange 100 in step 1014.

When telephone exchange 100 receives incoming call response signal 1 from transit exchange 500, telephone exchange 100 connects telephone terminal 102 to communication line 1.

Thereafter, in step 1016, telephone terminal 102 and telephone terminal 201 start communicating with each other through communication line 1.

In the event of a major disaster such as a huge earthquake, there arise needs for people living or staying in areas other than the disaster-affected area to want to make emergency calls for confirming the safety of people living or staying in the disaster-affected area.

In the disaster-affected area, however, the called people are often unable to directly respond to the calls from the people making the calls living or staying outside of the disaster-affected area for various reasons including collapsed houses, telephone line disconnections, mobile telephone base station service failures, etc.

The general telephone system described above with reference to Figs. 1 through 3 may not necessarily be able to meet the above needs in the event of a major disaster.

### SUMMARY OF THE INVENTION

An exemplary object of the present invention is to provide a telephone system, a positional information server, a telephone exchange, and a method of controlling a telephone system, which will solve the above problems of the related art.

A telephone system according to an exemplary aspect of the invention includes:
a plurality of telephone terminals;
a telephone network having a plurality of telephone exchanges accommodating the telephone terminals;
a positional information storage unit that stores positional information of the telephone terminals;
a determining unit that is notified by one of the telephone exchanges which has received the call from the calling telephone terminal, of a called telephone terminal, which is one of the telephone terminals called by a call from a calling telephone terminal, which is one of the telephone terminals, searches the positional information storage unit for the positional information of the called telephone terminal, and determines whether the called telephone terminal is present in a particular area or not based on the positional information retrieved from the positional information storage unit; and
an indicating unit that, if the called telephone terminal is present in the particular area, retrieves one of the telephone terminals which is present in a predetermined range based on the called telephone terminal as a neighboring telephone terminal, based on the positional information stored in the positional information storage unit, and indicates the retrieved telephone terminal to one of the telephone exchanges;
wherein each of the telephone exchanges includes:
a connection requesting unit that sends a connection request signal for requesting a connection between the called telephone terminal and the neighboring telephone terminal, to another one of the telephone exchanges; and
a calling unit that receives a connection request signal from another one of the telephone exchanges and sends a call signal to one of the telephone terminals to which a request to be connected is made by the connection request signal.

A positional information server, which is connected to a telephone network having a plurality of telephone exchanges accommodating a plurality of telephone terminals, according to an exemplary aspect of the invention includes:
a determining unit that is notified by one of the telephone exchanges which has received the call from the calling telephone terminal, of a called telephone terminal, which is one of the telephone terminals called by a call from a calling telephone terminal, which is one of the telephone terminals, searches a positional information storage unit which stores positional information of the telephone terminals for the positional information of the called telephone terminal, and determines whether the called telephone terminal is present in a particular area or not based on the positional information retrieved from the positional information storage unit; and
an indicating unit that, if the called telephone terminal is present in the particular area, retrieves one of the telephone terminals which is present in a predetermined range based on the called telephone terminal as a neighboring telephone terminal, based on the positional information stored in the positional information storage unit , indicates the retrieved telephone terminal to the one of the telephone exchanges, and instructs one of the telephone exchanges to send a call signal to the neighboring telephone terminal.

A telephone exchange, which is connected to a positional information server and which accommodates a plurality of telephone terminals, according to an exemplary aspect of the invention includes:
a connection requesting unit that receives a call from a calling telephone terminal, which is one of the telephone terminals, and sends, to another telephone exchange, a connection request signal for requesting a connection between a called telephone terminal, which is one of the telephone terminals called by the call from the calling telephone terminal, and a neighboring telephone terminal, which is one of the telephone terminals that is present in a predetermined range cased on the called telephone terminal which is indicated by the positional information server; and
a calling unit that receives a connection request signal from another telephone exchange and sends a call signal to one of the telephone terminals to which a request to be connected is made by the connection request signal.

A method of controlling a telephone system, which is to be carried out by a positional information server connected to a telephone network having a plurality of telephone exchanges accommodating a plurality of telephone terminals, according to an exemplary aspect of the invention includes:
being notified by one of the telephone exchanges which has received the call from the calling telephone terminal, of a called telephone terminal, which is one of the telephone terminals to which a call has been made from a calling telephone terminal, which is one of the telephone terminals, searching a positional information storage which stores positional information of the telephone terminals for the positional information of the called telephone terminal, and determining whether the called telephone terminal is present in a particular area or not based on the positional information retrieved from the positional information storage; and
if the called telephone terminal is present in the particular area, retrieving one of the telephone terminals which is present in a predetermined range based on the called telephone terminal as a neighboring telephone terminal, based on the positional information stored in the positional information storage, indicating the retrieved telephone terminal to one of the telephone exchanges, and instructing one of the telephone exchanges to send a call signal to the neighboring telephone terminal.

A method of controlling a telephone system, which is to be carried out by a telephone exchange connected to a positional information server and which accommodates a plurality of telephone terminals, according to an exemplary aspect of the invention includes:
receiving a call from a calling telephone terminal, which is one of the telephone terminals, and sending, to another telephone exchange, a connection request signal for requesting a connection between a called telephone terminal, which is one of the telephone terminals to which a call has been made from a calling telephone terminal, and a neighboring telephone terminal, which is one of the telephone terminals that is present in a predetermined range based on the called telephone terminal which is indicated by the positional information server; and
receiving a connection request signal from another telephone exchange and sending a call signal to one of the telephone terminals to which a request to be connected is made by the connection request signal.

The above and other objects, features, and advantages of the present invention will become apparent from the following description with reference to the accompanying drawings which illustrate an example of the present invention.

### BRIEF DESCRIPTION OF THE DRAWINGS

Fig. 1 is a block diagram showing an example of the configuration of a general telephone system;
Fig. 2 is a block diagram showing the manner in which the telephone system shown in Fig. 1 operates;
Fig. 3 is a flowchart of an operation sequence of the telephone system shown in Fig. 1;
Fig. 4 is a block diagram showing the configuration of a telephone system according to a first exemplary embodiment of the present invention;
Fig. 5 is a block diagram showing an example of the configuration of a positional information server shown in Fig. 4;
Fig. 6 is a block diagram showing an example of the configuration of a telephone exchange shown in Fig. 4;
Fig. 7 is a block diagram showing the positional relationship of telephone terminals shown in Fig. 4;
Fig. 8 is a block diagram showing the manner in which the telephone system shown in Fig. 4 operates;
Fig. 9 is a flowchart of an operation sequence of the telephone system shown in Fig. 4;
Fig. 10 is a block diagram showing the positional relationship of telephone terminals shown in Fig. 4;
Fig. 11 is a flowchart of an operation sequence of the telephone system shown in Fig. 4;
Fig. 12 is a block diagram showing the configuration of a telephone system according to a second exemplary embodiment of the present invention;
Fig. 13 is a block diagram showing an example of the configuration of a positional information server shown in Fig. 12;
Fig. 14 is a block diagram showing the positional relationship of telephone terminals shown in Fig. 12;
Fig. 15 is a block diagram showing the manner in which the telephone system shown in Fig. 12 operates;
Fig. 16 is a flowchart of an operation sequence of the telephone system shown in Fig. 12;
Fig. 17 is a flowchart of an operation sequence of the telephone system shown in Fig. 12;

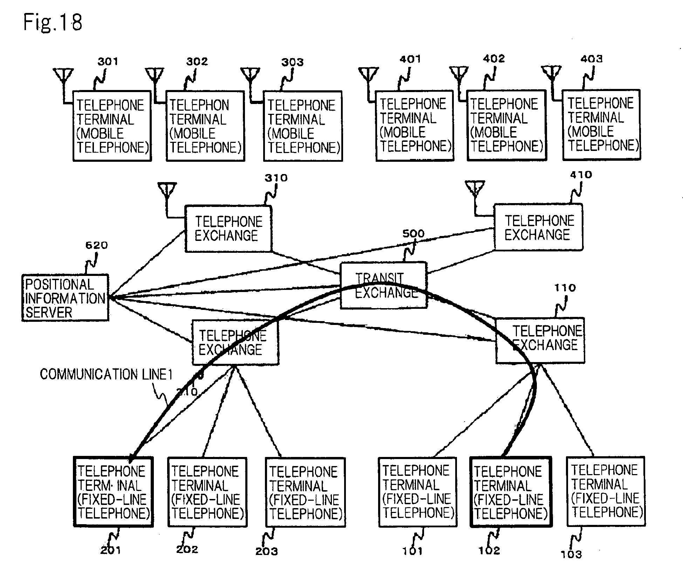

Fig. 18 is a block diagram showing the manner in which a telephone system according to a third exemplary embodiment of the present invention operates;
Fig. 19 is a block diagram showing the manner in which the telephone system according to the third exemplary embodiment of the present invention operates;
Fig. 20 is a block diagram showing the manner in which the telephone system according to the third exemplary embodiment of the present invention operates;
Fig. 21 is a block diagram showing the manner in which the telephone system according to the third exemplary embodiment of the present invention operates;
Fig. 22 is a flowchart of an operation sequence of the telephone system according to the third exemplary embodiment of the present invention;
Fig. 23 is a flowchart of an operation sequence of a telephone system according to a fourth exemplary embodiment of the present invention;
Fig. 24 is a block diagram showing the configuration of a telephone system according to a fifth exemplary embodiment of the present invention;
Fig. 25 is a block diagram showing the manner in which the telephone system shown in Fig. 24 operates; and
Fig. 26 is a flowchart of an operation sequence of the telephone system shown in Fig. 24.

### DETAILED DESCRIPTION OF THE EXEMPLARY EMBODIMENTS

Preferred exemplary embodiments of the present invention will be described in detail below with reference to the drawings.

### 1 st exemplary embodiment:

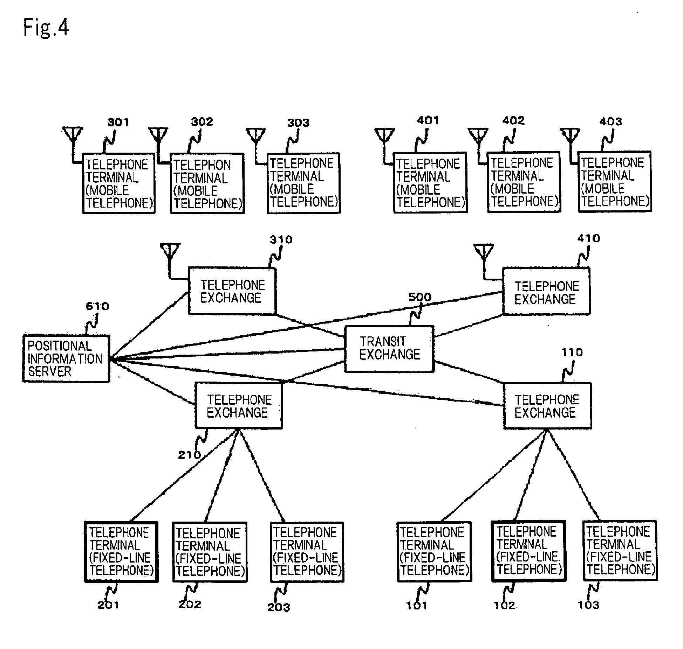

Fig. 4 shows in block form the configuration of a telephone system according to a first exemplary embodiment of the present invention.

As shown Fig. 4, the telephone system according to the first exemplary embodiment is different from the general telephone system shown in Fig. 1 in that it includes telephone exchanges 110, 210, 310, 410 instead of telephone exchanges 100, 200, 300, 400 and additionally has positional information server 610. Those parts of the telephone system shown in Fig. 4 which are identical to those of the telephone system shown in Fig. 1 are denoted by identical reference numerals and will not be described in detail below.

When telephone exchanges 110, 210, 310, 410 receives an outgoing call from a calling telephone terminal, they indicate a called telephone terminal to positional information server 610.

If the called telephone terminal is in a certain area, then positional information server 610 indicates a neighboring telephone terminal which is present in a given range based on the called telephone terminal to telephone exchanges 110, 210, 310, 410.

Telephone exchanges 110, 210, 310, 410 send a connection request signal for requesting a connection between the called telephone terminal and the neighboring telephone terminal indicated from positional information server 610, to other telephone exchanges which accommodate these telephone terminals. When telephone exchanges 110, 210, 310, 410 receive the connection request signal from other telephone exchanges, telephone exchanges 110, 210, 310, 410 send a call signal to the telephone terminals requested by the connection request signal.

Configurational details of positional information server 610 and telephone exchanges 110, 210, 310, 410 according to the present exemplary embodiment will be described below.

First, the configurational details of positional information server 610 will be described below.

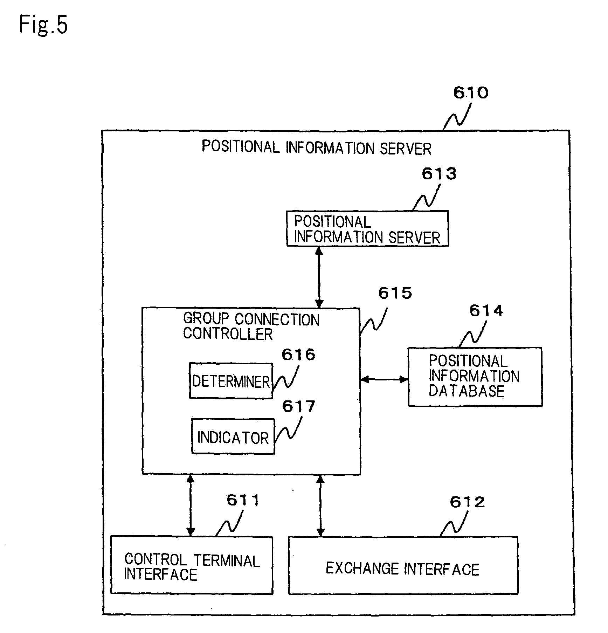

Fig. 5 shows in block form an example of the configuration of positional information server 610.

As shown in Fig. 5, positional information server 610 comprises control terminal interface 611, exchange interface 612, range information setting section 613, positional information database 614 serving as a positional information storage, and group connection controller 615.

Control terminal interface 611 serves as a communication means for communicating with a control terminal (not shown) disposed in a data center or the like. The administrator of the telephone system administers positional information server 610 through control terminal interface 611.

Exchange interface 612 serves as a communication means for communicating with the telephone exchanges.

Positional information database 614 stores the positional information of the telephone terminals in association with the telephone numbers thereof, and also stores the positional information of a particular area. The administrator operates the control terminal to store the positional information of the particular area into positional information database 614. The positional information of the telephone terminals includes the positional information of fixed-line telephones and the positional information of mobile telephones. The positional information of mobile telephones may be positional information specified by information from a plurality of base stations or GSP information of the mobile telephones. In the present exemplary embodiment, any process may be employed to specify the positions of telephone terminals and will not be described in detail below.

Range information setting section 613 stores range information about a given range which serves as a range from which to retrieve a telephone terminal in the neighborhood of a called telephone terminal. The range information may be represented by a value indicative of the range, e.g., a radius of 50 meters. The administrator operates the control terminal to store the range information about the given range into range information setting section 613.

Group connection controller 615 comprises determiner 616 and indicator 617. Based on the telephone number of a called telephone terminal indicated by telephone exchanges 110, 210, 310, 410, group connection controller 615 searches positional information database 614 for the positional information of the called telephone terminal. Based on the positional information of the called telephone terminal retrieved from positional information database 614, group connection controller 615 determines whether the called telephone terminal is in a particular area or not.

If the called telephone terminal is in the particular area, then group connection controller 615 searches for a telephone terminal that is present in the given range based on the called telephone terminal based on the positional information of the telephone terminals stored in positional information database 614. Then, group connection controller 615 indicates the retrieved telephone terminal to telephone exchanges 110, 210, 310, 410.

When group connection controller 615 receives an incoming call response signal from a telephone exchange, group connection controller 615 indicates, to telephone exchanges 110, 210, 310, 410, that the transmission of call signals to other telephone terminals other than the telephone terminal that has responded, is stopped to cancel communication lines, i.e., the telephone terminals other than the telephone terminal that has responded are to be disconnected.

The configurational details of telephone exchanges 110, 210, 310, 410 will be described below. Though only the configurational details of telephone exchange 110 will be described below, other telephone exchanges 210, 310, 410 are identical in configuration to telephone exchange 110.

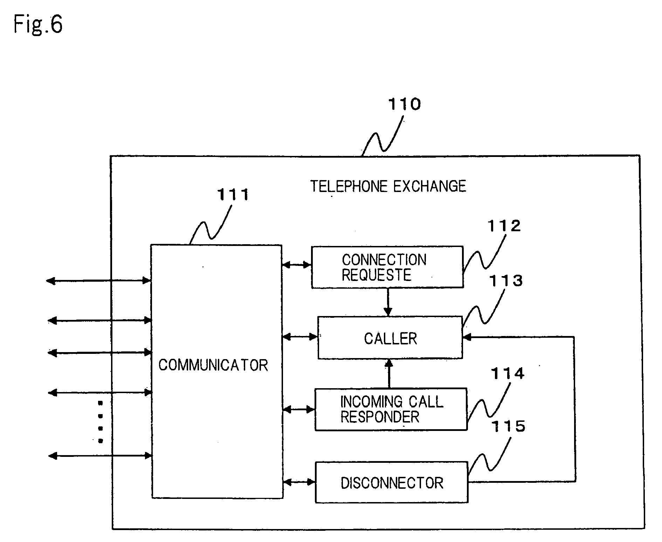

Fig. 6 shows in block form the configuration of telephone exchange 110.

As shown in Fig. 6, telephone exchange 110 comprises communicator 111, connection requester 112, caller 113, incoming call responder 114, and disconnector 115.

Communicator 111 serves as a communication means for communicating with telephone terminals accommodated by telephone exchange 110, transit exchange 500, and positional information server 610.

When connection requester 112 receives a call from a calling telephone terminal, connection requester 112 sends a connection request signal for requesting a connection to a called telephone terminal, to a telephone exchange which accommodates the called telephone terminal, and also sends information indicative of the called telephone terminal to positional information server 610.

When connection requester 112 receives information indicative of a telephone terminal in the neighborhood of the called telephone terminal, connection requester 112 sends a connection request signal for requesting a connection to the indicated neighboring telephone terminal to another telephone exchange which accommodates the indicated neighboring telephone terminal.

In order to connect the calling telephone terminal and the telephone terminal to which a request to be connected has been made, connection requester 112 establishes a communication line between the telephone exchange to which it has sent the connection request signal and communicator 111.

When connection requester 112 receives a connection request signal from another telephone exchange, connection requester 112 instructs caller 113 to start sending a call signal to a telephone terminal to which a request to be connected is made by the received connection request signal.

Caller 113 sends the call signal to the telephone terminal indicated by connection requester 112. When caller 113 receives a call signal from another telephone exchange, caller 113 transfer the call signal to the calling telephone terminal.

When incoming call responder 114 receives a response to the call signal from the telephone terminal to which caller 113 has sent the call signal, incoming call responder 114 sends an incoming call response signal indicating that it has received the response, to a telephone exchange which accommodates the calling telephone terminal. At this time, incoming call responder 114 connects the responding telephone terminal to the communication line which has been established.

When incoming call responder 114 receives an incoming call response signal from another telephone exchange, incoming call responder 114 connects the calling telephone terminal to the communication line which has been established.

Disconnector 115 transfers the incoming call response signal which incoming call responder 114 has received from the other telephone exchange, to positional information server 610.

When the telephone number of a telephone terminal to be disconnected is indicated from positional information server 610 to disconnector 115, disconnector 115 sends a disconnection request signal for the indicated telephone terminal to a telephone exchange which accommodates the indicated telephone terminal.

When disconnector 115 receives a disconnection request signal from another telephone exchange, disconnector 115 instructs caller 113 to stop sending a call signal to the telephone terminal to which a request to be disconnected has been made by the disconnection request signal. At this time, disconnector 115 cancels the communication line between the telephone exchange from which the disconnection request signal has been received and communicator 111.

Operation of the telephone system according to the present exemplary embodiment will be described below. It is assumed that a major disaster has occurred and the administrator of the telephone system has stored the positional information of the disaster-affected area as the particular area in positional information database 614.

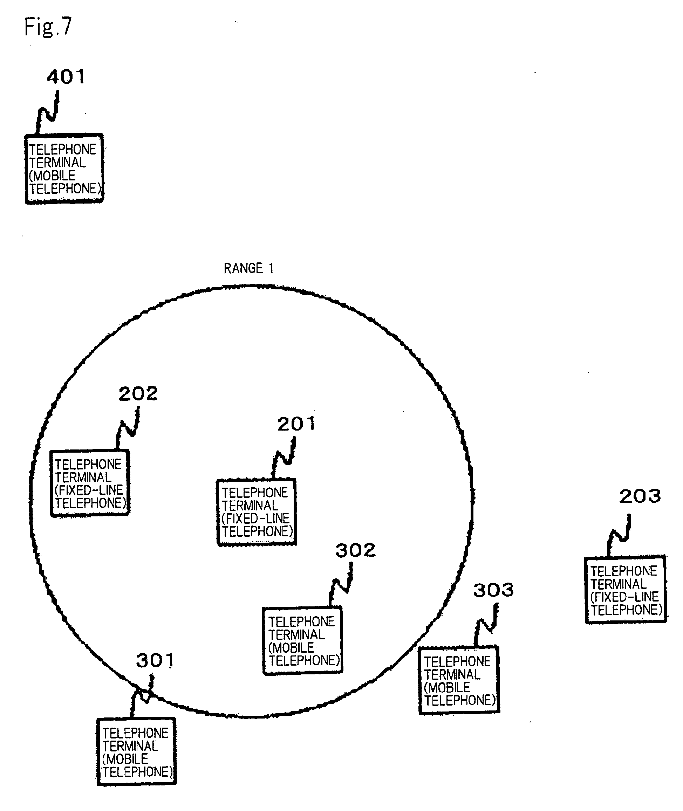

First, a mode of operation in which telephone terminals accommodated by telephone exchanges 110, 210, 310, 410 have the positional relationship shown in Fig. 7 and in which telephone terminal 102 tries to make a call to telephone terminal 201 will be described below.

Range 1 shown in Fig. 7 serves as a given range whose range information is stored in range information setting section 613.

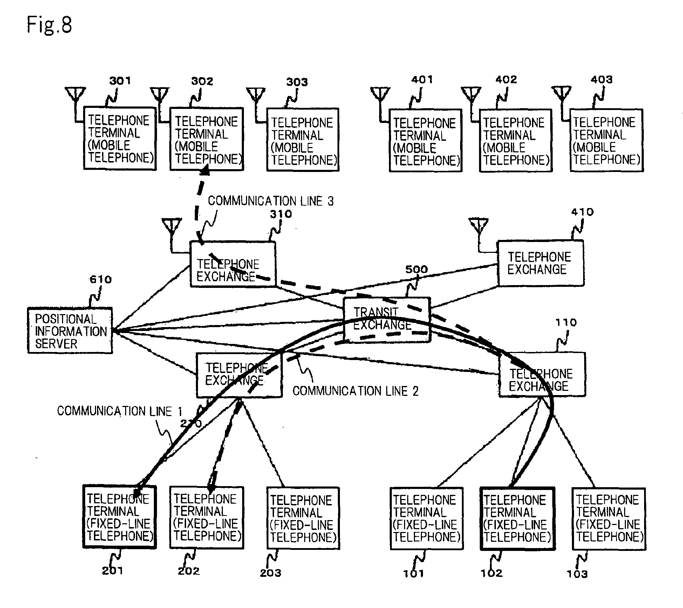

When telephone terminal (calling telephone terminal) 102 tries to make a call to telephone terminal (called telephone terminal) 201, communication lines are established for telephone terminals (neighboring telephone terminals) 202, 302, other than telephone terminal 201, which are present in range 1 shown in Fig. 7, and call signals start being sent to telephone terminals 201, 202, 302, as shown in Fig. 8.

In Fig. 8, the communication line between telephone terminal 102 as the calling telephone terminal and telephone terminal 201 as the called telephone terminal is indicated by the solid lines, and the communication lines between telephone terminal 102 as the calling telephone terminal and telephone terminals 202, 302 as the neighboring telephone terminals are indicated by the dotted lines.

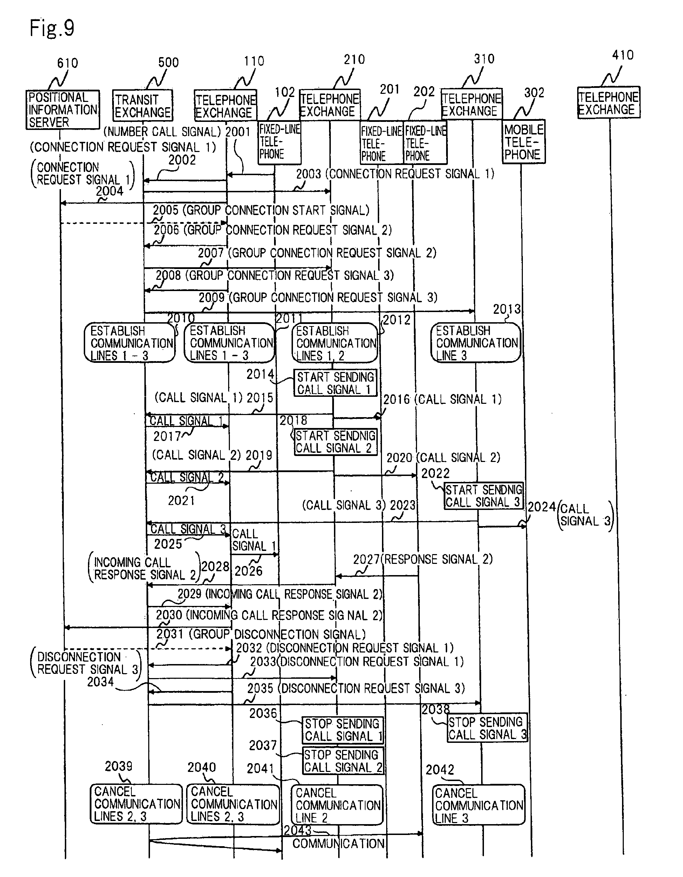

Operation of the telephone system at this time will be described below with reference to a flowchart shown in Fig. 9.

As shown in Fig. 9, when the user operates telephone terminal 102 to make a call specifying the telephone number of telephone terminal 201, telephone terminal 102 sends a number call signal including the telephone number of telephone terminal 201 to telephone exchange 110 in step 2001.

When telephone exchange 110 receives the number call signal from telephone terminal 102, connection requester 112 sends connection request signal 1 including the telephone number of telephone terminal 201 to transit exchange 500 in step 2002.

When transit exchange 500 receives connection request signal 1 from telephone exchange 110, transit exchange 500 determines telephone exchange 210 which accommodates telephone terminal 201 based on the telephone number of telephone terminal 201 which is included in connection request signal 1, and transfers connection request signal 1 to telephone exchange 210 in step 2003.

Connection requester 112 of telephone exchange 110 sends retrieval request signal 1 including the telephone number of telephone terminal 201 to positional information server 610 in step 2004.

When positional information server 610 receives retrieval request signal 1, group connection controller 615 searches positional information database 614 for the positional information of telephone terminal 201 based on the telephone number of telephone terminal 201 which is included in retrieval request signal 1. Group connection controller 615 determines whether telephone terminal 201 is in the disaster-affected area or not based on the retrieved positional information of telephone terminal 201 and the positional information of the disaster-affected area which is stored in positional information database 614.

If telephone terminal 201 is not in the disaster-affected area, then group connection controller 615 sends a signal indicating that telephone terminal 201 is not in the disaster-affected area to telephone exchange 110, and finishes its processing sequence. When telephone exchange 110 receives the signal indicating that telephone terminal 201 is not in the disaster-affected area, telephone exchange 110 finishes the transmission of connection request signal 1.

If telephone terminal 201 is in the disaster-affected area, then group connection controller 615 searches positional information database 614 for the telephone numbers of telephone terminals (neighboring telephone terminals) that are present in the given range based on telephone terminal 201, based on the range information of the given stored in range information setting section 613 and the telephone number of telephone terminal 201. In the present exemplary embodiment, group connection controller 615 searches for the telephone numbers of telephone terminals 202, 302 that are present in the given range (range 1) based on the telephone terminal 201.

Group connection controller 615 sends a group connection start signal including the retrieved telephone numbers of telephone terminals 202, 302 and an instruction to send call signals to telephone terminals 202, 302, to telephone exchange 110 in step 2005.

When telephone exchange 110 receives the group connection start signal from positional information server 610, connection requester 112 sends a group connection request signal including the telephone number of telephone terminal 202 and a group connection request signal including the telephone number of telephone terminal 302 to transit exchange 500 based on the group connection start signal in respective steps 2006, 2008.

Signals and a communication line which are involved in the connection between telephone terminal 102 and telephone terminal 202 will hereafter be assigned a suffix "2", and signals and a communication line which are involved in the connection between telephone terminal 102 and telephone terminal 302 will hereafter be assigned a suffix "3".

When transit exchange 500 receives group connection request signal 2 from telephone exchange 110, transit exchange 500 transfers group connection request signal 2 to telephone exchange 210 in step 2007. When transit exchange 500 receives group connection request signal 3 from telephone exchange 110, transit exchange 500 transfers group connection request signal 3 to telephone exchange 310 in step 2009.

When telephone exchange 210 receives group connection request signal 2 from transit exchange 500, connection requester 112 thereof ascertains whether telephone terminal 202 is capable of receiving the call or not, i.e., whether telephone terminal 202 is idle or not.

Since telephone exchange 210 receives connection request signal 1 from transit exchange 500, connection requester 112 also ascertains whether telephone terminal 201 is idle or not.

When telephone exchange 310 receives group connection request signal 3 from transit exchange 500, connection requester 112 thereof ascertains whether telephone terminal 302 is idle or not.

During this time, transit exchange 500 and telephone exchanges 110, 210, 310 which have routed connection request signal 1 and group connection request signals 2, 3 establish communication lines 1, 2, 3 in order to connect telephone exchanges 110, 210, 310 to each other in steps 2010, 2011, 2012, 2013.

Telephone exchange 110 and telephone exchange 210 are now connected to each other by communication line 1 for a normal connection and by communication line 2 for a group connection, and telephone exchange 110 and telephone exchange 310 are now connected to each other by communication line 3 for a group connection.

If telephone terminal 201 is idle, then connection requester 112 of telephone exchange 210 instructs caller 113 to start sending call signal 1 to telephone terminal 201 and also to start sending call signal 1 to telephone terminal 102 via transit exchange 500 and telephone exchange 110 in steps 2014,2015,2016,2017.

If telephone terminal 202 is idle, then connection requester 112 of telephone exchange 210 instructs caller 113 to start sending call signal 2 to telephone terminal 202 and also to start sending call signal 1 to telephone terminal 102 via transit exchange 500 and telephone exchange 110 in steps 2018, 2019, 2020, 2021.

Similarly, if telephone terminal 302 is idle, then connection requester 112 of telephone exchange 310 instructs caller 113 to start sending call signal 2 to telephone terminal 302 and also to start sending call signal 1 to telephone terminal 102 via transit exchange 500 and telephone exchange 110 in steps 2022, 2023, 2024, 2025.

At this time, caller 113 may send call signals of different types, i.e., call signals for normal and group connections, to telephone terminals. Specifically, caller 113 may send a call signal for a normal connection to telephone terminal 201 as the called telephone terminal, and may send a call signal for a group connection to telephone terminals 202, 302 as neighboring telephone terminals.

Each of the telephone terminals determines the type of a connection, i.e., a normal connection or a group connection, from the type of a call signal which the telephone terminal has received. If the call signal received by a telephone terminal represents a group connection, then the telephone terminal may change its ring tone, or may change its incoming call display, or may display an incoming call message including a group connection, thereby indicating to the user that the call signal represents the group connection.

Since the type of the received call signal is representative of the type of the connection, the user of a neighboring telephone terminal which has received the call signal can properly handle the call after responding to the call signal.

Caller 113 of telephone exchange 110 receives a plurality of call signals for telephone terminal 102 from telephone exchanges 210, 310. Caller 113 transfers the received call signals in step s026 as follows:

When caller 113 receives a call signal from telephone exchange 210 which accommodates telephone terminal 201 as the called telephone terminal and a call signal from telephone exchange 310 which accommodates telephone terminal 302 as the neighboring telephone terminal, caller 113 preferentially transfers the call signal from telephone exchange 210 to telephone terminal 102.

When caller 113 receives call signal 1 for telephone terminal 201 as the called telephone terminal and call signal 2 for telephone terminal 202 as the neighboring telephone terminal from telephone exchange 210, caller 113 preferentially transfers call signal 1 for telephone terminal 201 to telephone terminal 102.

When the user of telephone terminal 202 makes an action to respond to call signal 2, then telephone terminal 202 sends response signal 2 to telephone exchange 210 in step 2027. When telephone exchange 210 receives response signal 2 from telephone terminal 202, incoming call responder 114 of telephone exchange 210 sends incoming call response signal 2 indicating that telephone terminal 202 has responded, to transit exchange 500 in step 2028.

Incoming call responder 114 of telephone exchange 210 connects telephone terminal 202 which has responded to communication line 2 to establish a connection with telephone terminal 102.

When transit exchange 500 receives incoming call response signal 2 from telephone exchange 210, transit exchange 500 transfers incoming call response signal 2 to telephone exchange 110 in step 2029.

When telephone exchange 110 receives incoming call response signal 2 from transit exchange 500, incoming call responder 114 of telephone exchange 110 connects telephone terminal 102 to communication line 2 to establish a connection with telephone terminal 201.

Incoming call responder 114 of telephone exchange 110 transfers received incoming call response signal 2 to disconnector 115.

Disconnector 115 of telephone exchange 110 transfers received incoming call response signal 2 to positional information server 610 in step 2030.

When positional information server 610 receives incoming call response signal 2 from telephone exchange 110, group connection controller 615 inserts the telephone numbers of telephone terminals to which call signals have been sent, except for telephone terminal 202 which has responded, as the telephone numbers of telephone terminals to be disconnected, into a group disconnection signal, and sends the group disconnection signal to telephone exchange 110 in step 2031. In the illustrated exemplary embodiment, since call signals have been sent to telephone terminal 201 and telephone terminal 302 except for telephone terminal 202 which has responded, group connection controller 615 sends a group disconnection signal including the telephone numbers of telephone terminal 201 and telephone terminal 302 to telephone exchange 110.

When telephone exchange 110 receives the group disconnection signal from positional information server 610, disconnector 115 of telephone exchange 110 sends disconnection request signal 1 including the telephone number of telephone terminal 201 and disconnection request signal 3 including the telephone number of telephone terminal 302 to transit exchange 500 based on the group disconnection signal in respective steps 2032, 2034.

When transit exchange 500 receives disconnection request signal 1 from telephone exchange 110, transit exchange 500 transfers disconnection request signal 1 to telephone exchange 210 in step 2033. When transit exchange 500 receives disconnection request signal 3 from telephone exchange 110, transit exchange 500 transfers disconnection request signal 3 to telephone exchange 310 in step 2035.

When telephone exchange 210 receives disconnection request signal 1 from transit exchange 500, disconnector 115 of telephone exchange 210 instructs caller 113 to stop sending call signal 1 in step 2036.

When telephone exchange 210 receives a response from telephone terminal 202, incoming call responder 114 of telephone exchange 210 instructs caller 113 to stop sending call signal 2 in step 2037.

When telephone exchange 310 receives disconnection request signal 3 from transit exchange 500, disconnector 115 of telephone exchange 310 instructs caller 113 to stop sending call signal 3 in step 2038.

Transit exchange 500 and telephone exchanges 110, 210 which have routed connection request signal 1, corresponding to disconnection request signal 1 in steps 2039, 2040, 2041, discontinue use of communication line 1.

Transit exchange 500 and telephone exchanges 110, 310 which have routed connection request signal 3, corresponding to disconnection request signal 3 in steps 2039, 2040, 2042, discontinue use of communication line 3.

Thereafter, in step 2043, telephone terminal 102 and telephone terminal 202 start communicating with each other through communication line 2 for the group connection.

At this time, if users who are unaware of each other suddenly start to be involved in a telephone conversation through the group connection, they then may possibly be confused. Therefore, after telephone terminal 102 and telephone terminal 202 are connected to communication line 2, each of incoming call responders 114 of telephone exchange 110 and telephone exchange 210 may instruct caller 113 to send an announcement that the connection which has been made between telephone exchange 110 and telephone exchange 210 is a group connection.

The announcement makes it easy for the users to talk to each other without confusion even though they are unaware of each other and even through they have started the telephone conversation through the group connection.

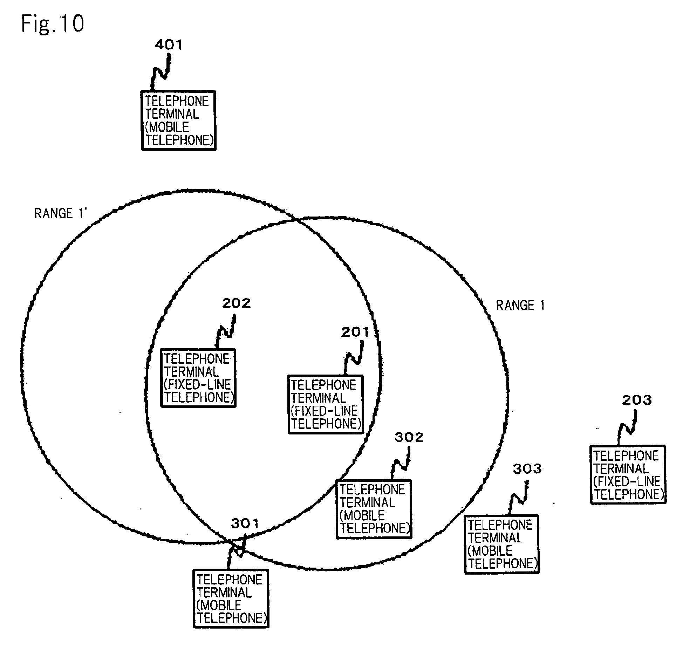

Another mode of operation in which telephone terminals accommodated by telephone exchanges 110, 210, 310, 410 have the positional relationship shown in Fig. 10 and in which telephone terminal 103 tries to make a call to telephone terminal 202 while telephone terminal 102 and telephone terminal 202 are communicating with each other through the group connection will be described below.

As described above, when telephone terminal 102 tries to make a call to telephone terminal 201, telephone terminals in the neighborhood of telephone terminal 201 are searched for within range 1 shown in Fig. 10. However, when telephone terminal 103 tries to make a call to telephone terminal 202, telephone terminals in the neighborhood of telephone terminal 202 are searched for within range 1' shown in Fig. 10. Range 1' also covers telephone terminal 201.

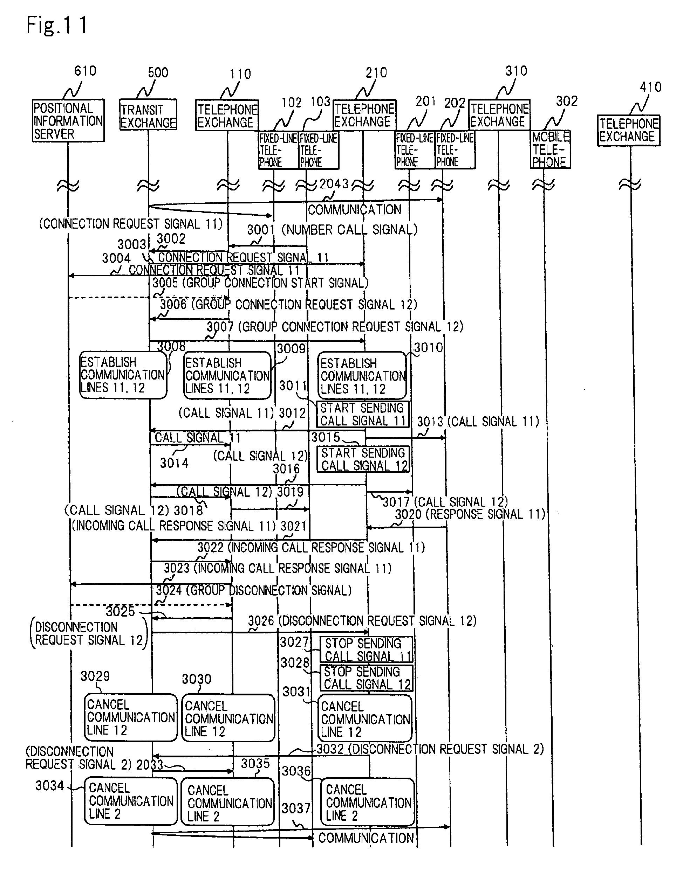

Operation of the telephone system at this time will be described below with reference to a flowchart shown in Fig. 11.

As shown in Fig. 11, telephone terminal 102 and telephone terminal 202 are communicating with each other through the group connection in step 2043.

When the user operates telephone terminal 103 to make a call specifying the telephone number of telephone terminal 202, telephone terminal 103 sends a number call signal including the telephone number of telephone terminal 202 to telephone exchange 110 in step 3001.

Signals and a communication line which are involved in the connection between telephone terminal 103 and telephone terminal 202 will hereafter be assigned a suffix "11".

When telephone exchange 110 receives number call signal 11 from telephone terminal 103, connection requester 112 sends connection request signal 11 including the telephone number of telephone terminal 202 to transit exchange 500 in step 3002.

Transit exchange 500 receives connection request signal 11 from telephone exchange 110, and transfers connection request signal 11 to telephone exchange 210 in step 3003.

Connection requester 112 of telephone exchange 110 sends retrieval request signal 11 including the telephone number of telephone terminal 202 to positional information server 610 in step 3004.

When positional information server 610 receives retrieval request signal 11 from telephone exchange 110, group connection controller 615 determines whether or not telephone terminal 202 is in the disaster-affected area.

Since telephone terminal 202 is in the disaster-affected area, group connection controller 615 searches for the telephone number of a telephone terminal that is present in the given range (range 1') based on the telephone terminal 202, and sends a group connection start signal including the retrieved telephone number of telephone terminal 201 to telephone exchange 110 in step 3005.

When telephone exchange 110 receives the group connection start signal from positional information server 610, connection requester 112 sends a group connection request signal including the telephone number of telephone terminal 201 to transit exchange 500 in step 3006.

Signals and a communication line which are involved in the connection between telephone terminal 103 and telephone terminal 201 will hereafter be assigned a suffix "12".

When transit exchange 500 receives group connection request signal 12 from telephone exchange 110, transit exchange 500 transfers group connection request signal 12 to telephone exchange 210 in step 3007.

When telephone exchange 210 receives connection request signal 11 and group connection request signal 12 from transit exchange 500, connection requester 112 thereof ascertains whether or not telephone terminals 201, 202 are idle.

During this time, transit exchange 500 and telephone exchanges 110, 210, which have routed connection request signal 11 and group connection request signal 12, establish communication line 11 corresponding to connection request signal 11 and communication line 12 corresponding to group connection request signal 12 therebetween in steps 3008, 3009, 3010.

Telephone exchange 110 and telephone exchange 210 are now connected to each other by communication line 11 for a normal connection and by communication line 12 for a group connection.

Then, for indicating to telephone terminal 202 which is communicating through the group connection that there is a call through the normal connection, connection requester 112 of telephone exchange 210 instructs caller 113 to start sending call signals 11 to telephone terminals 202, 103 in steps 3011, 3012, 3013, 3014.

Specifically, inasmuch as telephone terminal 202 is communicating through the group connection, connection requester 112 of telephone exchange 210 instructs caller 113 to send a message indicating that there is an incoming call through the normal connection, as a call signal to telephone terminal 202. The message may be in the form of a ring tone used by call waiting. Telephone terminal 202 may switch from the call through the group connection to the call through the normal connection when the user presses the hook for a short period of time as is the case with call waiting.

If telephone terminal 201 is idle, then connection requester 112 of telephone exchange 210 instructs caller 113 to start sending call signals 12 to telephone terminals 201, 103 in steps 3015, 3016, 3017, 3018, 3019.

When the user presses the hook for a short period of time as is the case with call waiting, for example, in order for telephone terminal 202 to switch from the call through the group connection to the call through the normal connection, telephone terminal 202 sends response signal 11 to telephone exchange 210 in step 3020.

When telephone exchange 210 receives response signal 11 from telephone terminal 202, incoming call responder 114 of telephone exchange 210 sends incoming call response signal 11 to transit exchange 500 in step 3021.

Upon reception of response signal 11 from telephone terminal 202, telephone exchange 210 judges that telephone terminal 202 has switched from the group connection to the normal connection, and incoming call responder 114 of telephone exchange 210 connects telephone terminal 202 to communication line 11 to establish a connection with telephone terminal 103.

When transit exchange 500 receives incoming call response signal 11 from telephone exchange 210, transit exchange 500 transfers incoming call response signal 11 to telephone exchange 110 in step 3022.

When telephone exchange 110 receives incoming call response signal 11 from transit exchange 500, incoming call responder 114 of telephone exchange 110 connects telephone terminal 103 to communication line 11 to establish a connection with telephone terminal 202.

Disconnector 115 of telephone exchange 110 transfers incoming call response signal 11 to positional information server 610 in step 3023.

When positional information server 610 receives incoming call response signal 11 from telephone exchange 110, group connection controller 615 sends a group disconnection signal including the telephone number of telephone terminal 201 to telephone exchange 110 in step 3024. Telephone terminal 201 is a telephone terminal to which a call signal has been sent other than telephone terminal 202 which has responded.

When telephone exchange 110 receives the group disconnection signal from positional information server 610, disconnector 115 of telephone exchange 110 sends disconnection request signal 12 including the telephone number of telephone terminal 201 to transit exchange 500 in step 3025.

When transit exchange 500 receives disconnection request signal 12 from telephone exchange 110, transit exchange 500 transfers disconnection request signal 12 to telephone exchange 210 in step 3026.

When telephone exchange 210 receives disconnection request signal 12 from transit exchange 500, disconnector 115 of telephone exchange 210 instructs caller 113 to stop sending call signal 12 in step 3028.

Then, transit exchange 500 and telephone exchanges 110, 210 cancel communication line 12 corresponding to disconnection request signal 12 which they have routed, in steps 3029, 3030, 3031.

Since the connection of telephone terminal 202 has switched from the group connection to telephone terminal 102 to the normal connection to telephone terminal 103, incoming call responder 114 of telephone exchange 210 instructs caller 113 to stop sending call signal 11 in step 3027.

Disconnector 115 of telephone exchange 210 sends disconnection request signal 2 including the telephone number of telephone terminal 102 to transit exchange 500 in step 3032.

When transit exchange 500 receives disconnection request signal 2 from telephone exchange 210, transit exchange 500 transfers disconnection request signal 2 to telephone exchange 110 in step 3033.

Disconnector 115 of telephone exchange 110 receives disconnection request signal 2 from transit exchange 500.

Transit exchange 500 and telephone exchanges 110, 210 cancel communication line 12 corresponding to disconnection request signal 2 which they have routed, in steps 3034, 3035, 3036, thereby cutting off the communication between telephone terminal 102 and telephone terminal 202.

Thereafter, in step 3037, telephone terminal 103 and telephone terminal 202 start communicating with each other through the normal connection.

At this time, if communication through the group connection is suddenly cut off, the calling party may then be possibly confused. Therefore, caller 113 of telephone exchange 110 may send a message to telephone terminal 102, indicating that the normal connection on telephone 202, connected for the group connection, has been interrupted.

According to the present exemplary embodiment, if the called telephone terminal is in the disaster-affected area, then positional information server 610 searches for a neighboring telephone terminal which is present in the given range based on the called telephone terminal, and the telephone exchanges which accommodate the called telephone terminal and the neighboring telephone terminal send call signals to the called telephone terminal and the neighboring telephone terminal.

Therefore, a call signal is sent to the neighboring telephone terminal as well as to the called telephone terminal, resulting in a higher possibility for making an emergency contact to confirm the safety of the called party in the disaster-affected area.

Each of the telephone exchanges distinguishes between a group connection and a normal connection. If the telephone exchange has an incoming call through the normal connection for a neighboring telephone terminal which is communicating through the group connection, then the telephone exchange sends a message indicative of the incoming call through the normal connection to the neighboring telephone terminal.

Accordingly, if there is a call through the normal connection for the neighboring telephone terminal while the neighboring telephone terminal is responding to a call through the group connection, then such a call through the normal connection can be indicated to the neighboring telephone terminal.

### 2nd exemplary embodiment:

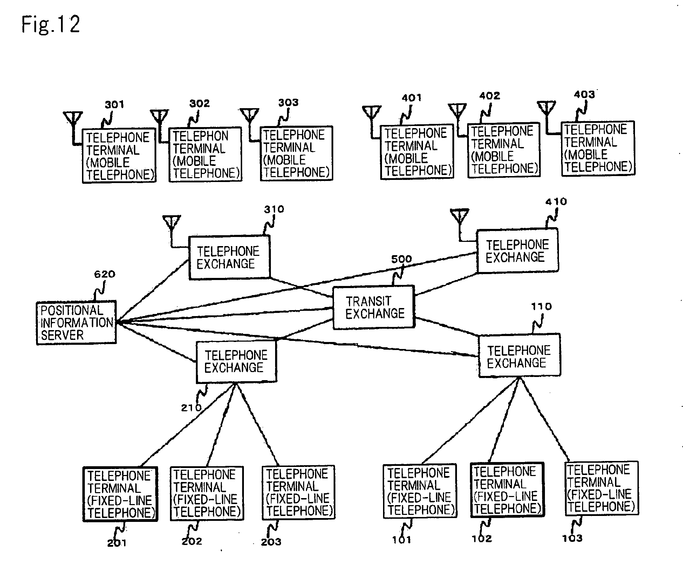

Fig. 12 shows in block form the configuration of a telephone system according to a second exemplary embodiment of the present invention.

As shown in Fig. 12, the telephone system according to the second exemplary embodiment is different from the telephone system according to the first exemplary embodiment in that it includes positional information server 620 instead of positional information server 610. Those parts of the telephone system shown in Fig. 12 which are identical to those of the telephone system according to the first exemplary embodiment shown in Fig. 4 are denoted by identical reference numerals and will not be described in detail below.

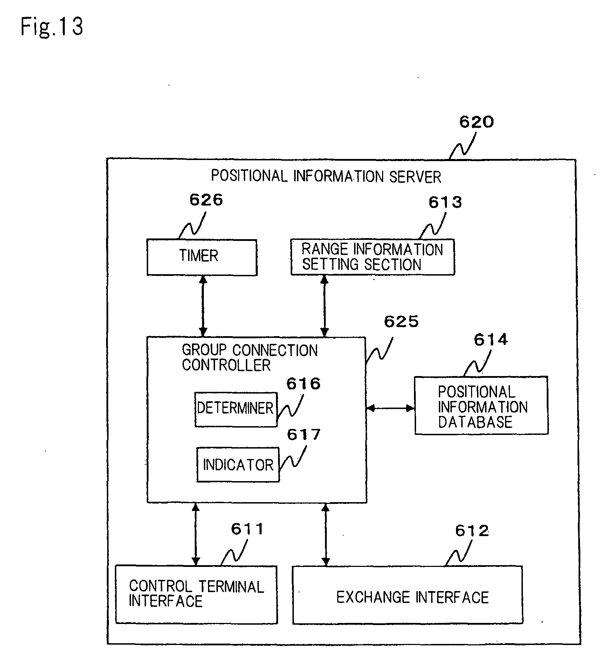

Fig. 13 shows in block form an example of the configuration of positional information server 620.

As shown in Fig. 13, positional information server 620 is different from positional information server 610 shown in Fig. 6 in that it includes group connection controller 625 instead of group connection controller 615 and additionally has timer 626. Those parts of positional information server 620 which are identical to those of positional information server 610 shown in Fig. 6 are denoted by identical reference numerals and will not be described in detail below.

Timer 626 is instructed by group connection controller 625 to measure a given call time. When timer 626 completes measuring the given call time, it sends a measurement completion signal to group connection controller 625. Timer 626 repeatedly measures the given call time until it is instructed to stop measuring the given call time by group connection controller 625. The administrator operates the control terminal to set the given call time in timer 626. The given call time may be a value representing a time, such as 10 calls or 30 seconds.

Group connection controller 625 has some operational details that are different from group connection controller 615. Only those different operational details of group connection controller 625 will be described below.

When group connection controller 625 receives a retrieval request signal from telephone exchanges 110, 210, 310, 410, group connection controller 625 determines whether or not called telephone terminal is in a particular area. At the time it is found that the called telephone terminal is in the particular area, group connection controller 625 instructs timer 626 to start measuring the given call time, and searches for a telephone terminal which is present in a given area based on the called telephone terminal.

When timer 626 completes measuring the given call time, group connection controller 625 indicates the retrieved neighboring telephone terminal to telephone exchanges 110, 210, 310, 410. Subsequently each time timer 626 completes measuring the given call time, group connection controller 625 expands the given area, searches positional information server 614 for a new neighboring telephone terminal in the expanded area, and sends information representative of the retrieved new neighboring telephone terminal to telephone exchanges 110, 210, 310, 410.

According to one process for expanding the given area, while timer 626 is measuring the given call time for the nth time, group connection controller 625 may retrieve the telephone number of a telephone terminal which is present within a range that is n times wider than the given range, outside of a range that is n - 1 times wider than the given range, as the telephone number of a neighboring telephone terminal. When the telephone number of a neighboring telephone terminal is retrieved in an expanded range, the preceding range that has been searched may be excluded to prevent any telephone terminal that is present in the searched preceding range from being counted twice.

According to another process for expanding the given area, range information setting section 613 may store the range information of a plurality of given ranges together with a priority sequence thereof, and each time the measurement of the given call time is completed, group connection controller 625 may acquire the range information from range information setting section 613 according to the priority sequence, and may search for a neighboring telephone terminal based on the acquired range information. If the priority sequence represents first range information whose value is set to a radius of 30 meters, second range information whose value is set to a radius of 50 meters, and third range information whose value is set to a radius of 60 meters, then the range within which a search will be made for a neighboring telephone terminal can be increased more precisely than if the given range is simply doubled and tripled.

When group connection controller 625 receives an incoming call response signal from telephone exchanges 110, 210, 310, 410, group connection controller 625 instructs timer 626 to stop measuring the given call time.

Operation of the telephone system shown in Fig. 12 will be described below.

It is assumed that a major disaster has occurred and that the administrator of the telephone system has stored the positional information of the disaster-affected area as the particular area in positional information database 614.

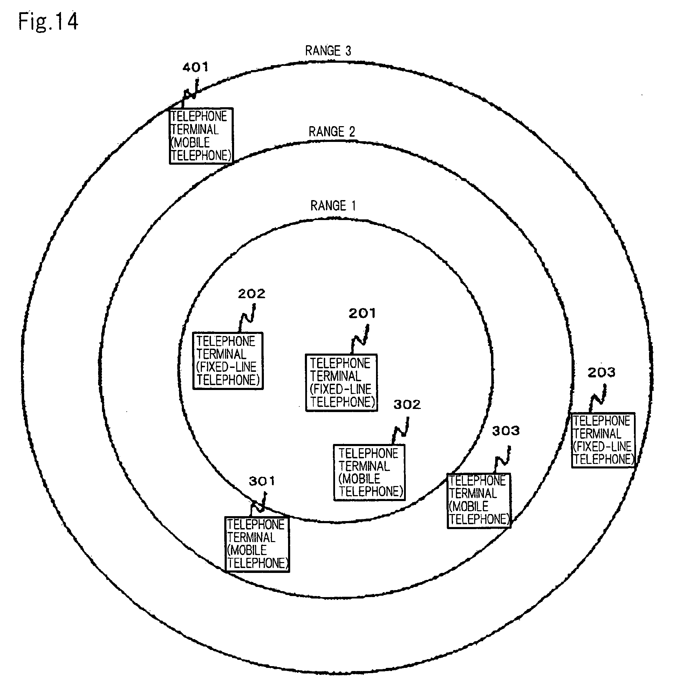

First, a mode of operation in which telephone terminals accommodated by telephone exchanges 110, 210, 310, 410 have the positional relationship shown in Fig. 14 and in which telephone terminal 102 tries to make a call to telephone terminal 201 will be described below.

Range 1 shown in Fig. 14 serves as a given range whose range information is stored in range information setting section 613. Range 2 shown in Fig. 14 is two times larger than range 1, and range 3 is three times larger than range 1.

When telephone terminal (calling telephone terminal) 102 tries to make a call to telephone terminal (called telephone terminal) 201, timer 626 starts measuring the given call time for the first time, communication line 1 for making a connection with telephone terminal 201 is established, and telephone terminal 102 starts sending a call signal to telephone terminal 201.

When the measurement of the given call time for the first time is completed, communication lines 2, 3 are established for connecting to telephone terminals (neighboring telephone terminals) 202, 302 which are present in range 1 shown in Fig. 14, and call signals start being sent to telephone terminals 202, 302.

When the measurement of the given call time for the second time is completed, communication lines 4, 5 are established for connecting to telephone terminals (neighboring telephone terminals) 301, 303 which are present outside of range 1, but within range 2 shown in Fig. 14, and call signals start being sent to telephone terminals 301, 303.

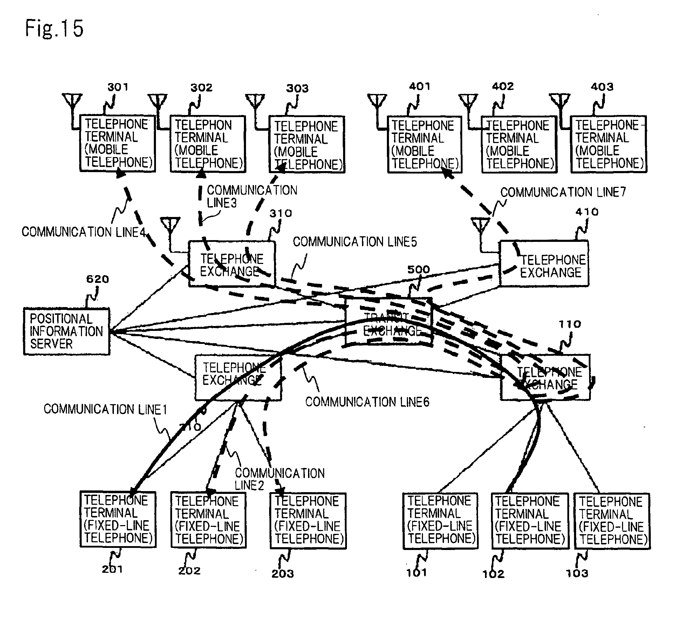

When the measurement of the given call time for the third time is completed, communication lines 6, 7 are established for connecting to telephone terminals (neighboring telephone terminals) 203, 401 which are present outside of range 2, but within range 3 shown in Fig. 14, and call signals start being sent to telephone terminals 203, 401. Fig. 15 shows the state of the telephone system at this time. At this time, communication lines are established which are connected to six neighboring telephone terminals, other than the called telephone terminal, and call signals are sent to those six neighboring telephone terminals in addition to the called telephone terminal.

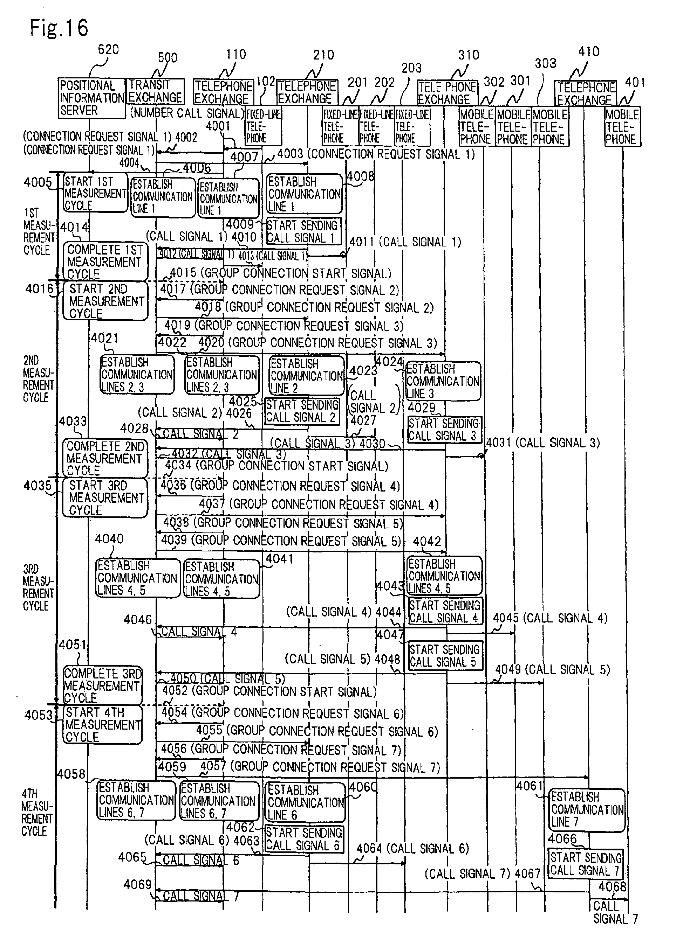

Operation of the telephone system at this time will be described below with reference to a flowchart shown in Fig. 16.

Operational details of the telephone system according to the second exemplary embodiment which are identical to those of telephone system according to the first exemplary embodiment will occasionally be omitted.

As shown in Fig. 16, telephone terminal 102 sends a number call signal to telephone exchange 110 in step 4001, as in step 2001 shown in Fig. 9.

Then, telephone exchange 110 sends connection request signal 1 to transit exchange 500 in step 4002, as in step 2002 shown in Fig. 9.

Then, transit exchange 500 transfers connection request signal 1 to telephone exchange 210 in step 4003, as in step 2003 shown in Fig. 9.

When telephone exchange 210 receives connection request signal 1 from transit exchange 500, connection requester 112 thereof ascertains whether or not telephone terminal 201 is idle. If telephone terminal 201 is idle, then connection requester 112 of telephone exchange 210 instructs caller 113 to start sending call signals 1 to telephone terminals 201, 102 in steps 4009, 4010, 4011, 4012, 4013, as in steps 2014, 2015, 2016, 2017 shown in Fig. 9.

While telephone exchange 210 is checking whether or not telephone terminal 201 is idle, transit exchange 500 and telephone exchanges 110, 210 which have routed connection request signal 1 establish communication line 1 in steps 4006, 4007, 4008.

Telephone exchange 110 sends retrieval request signal 1 to positional information server 620 in step 4004, as in step 2004 shown in Fig. 9.

When positional information server 620 receives retrieval request signal 1, group connection controller 625 thereof determines whether or not telephone terminal 201 is in the disaster-affected area.

If telephone terminal 201 is in the disaster-affected area, then group connection controller 625 instructs timer 626 to measure the given call time. When instructed by group connection controller 625, timer 626 starts measuring the given call time for the first time with an internal timer thereof in step 4005.

Then, group connection controller 625 searches for the telephone numbers of telephone terminals that are present within range 1 shown in Fig. 14 which is a given range based on telephone terminal 201. In the illustrated present exemplary embodiment, group connection controller 625 searches for the telephone numbers of telephone terminals 202, 302.

When timer 626 completes the measurement of the given call time for the first time in step 4014, timer 626 sends a measurement completion notice to group connection controller 625, and starts measuring the given call time for the second time in step 4016.

Group connection controller 625 sends a group connection start signal including the newly retrieved telephone numbers of telephone terminals 202, 302 to telephone exchange 110 in step 4015.

Then, telephone exchange 110 sends group connection request signals 2, 3 to transit exchange 500 in respective steps 4017, 4019, as in steps 2006, 2008 shown in Fig. 9.

Transit exchange 500 transfers group connection request signal 2 to telephone exchange 210 and transfers group connection request signal 3 to telephone exchange 310 in respective steps 4018, 4020, as in steps 2007, 2009 shown in Fig. 9.

When telephone exchange 210 receives group connection request signal 2, connection requester 112 thereof ascertains whether or not telephone terminal 202 is idle. If telephone terminal 202 is idle, then connection requester 112 instructs caller 113 to start sending call signals 2 to telephone terminals 202, 102 in steps 4025, 4026, 4027, 4028, as in steps 2018, 2019, 2020, 2021 shown in Fig. 9.

When telephone exchange 310 receives group connection request signal 3, connection requester 112 thereof ascertains whether or not telephone terminal 302 is idle. If telephone terminal 302 is idle, then connection requester 112 instructs caller 113 to start sending call signals 3 to telephone terminals 302, 102 in steps 4029, 4030, 4031, 4032, as in steps 2022, 2023, 2024, 2025 shown in Fig. 9.

While telephone exchanges 210, 310 are checking whether or not telephone terminals 202, 302 are idle, transit exchange 500 and telephone exchanges 110, 210, which have routed connection request signal 2, establish communication line 2, and transit exchange 500 and telephone exchanges 110, 310, which have routed connection request signal 3, establish communication line 3, in steps 4021, 4022, 4023, 4024.

While timer 626 is measuring the given call time for the second time, group connection controller 625 searches for the telephone numbers of telephone terminals which are present output of range 1 but within range 2 shown in Fig. 14. In the illustrated present exemplary embodiment, group connection controller 625 searches for the telephone numbers of telephone terminals 301, 303.

When timer 626 completes the measurement of the given call time for the second time in step 4033, timer 626 sends a measurement completion notice to group connection controller 625, and starts measuring the given call time for the third time in step 4035.

Group connection controller 625 sends a group connection start signal including the newly retrieved telephone numbers of telephone terminals 301, 303 to telephone exchange 110 in step 4034.

Signals and a communication line which are involved in the connection between telephone terminal 102 and telephone terminal 301 will hereafter be assigned a suffix "4", and signals and a communication line which are involved in the connection between telephone terminal 102 and telephone terminal 303 will hereafter be assigned a suffix "5".

Then, telephone exchange 110 sends group connection request signals 4, 5 to transit exchange 500 in respective steps 4036, 4038, as in steps 2006, 2008 shown in Fig. 9.

Then, transit exchange 500 transfers group connection request signals 4, 5 to telephone exchange 310 in respective steps 4037, 4039, as in steps 2007, 2009 shown in Fig. 9.

When telephone exchange 310 receives group connection request signals 4, 5 from transit exchange 500, connection requester 112 thereof ascertains whether or not telephone terminals 301, 303 are idle. If telephone terminals 301, 303 are idle, then connection requester 112 of telephone exchange 310 instructs callers 113 to start sending call signals 4 to telephone terminals 301, 102 and also to start sending call signals 5 to telephone terminals 303, 102 in steps 4043, 4044, 4045, 4046, 4047, 4048, 4049, 4050, as with steps 2022, 2023, 2024, 2025 shown in Fig. 9.

While telephone exchange 310 is checking whether or not telephone terminals 301, 303 are idle, transit exchange 500 and telephone exchanges 110, 310 which have routed group connection request signals 4, 5 establish communication lines 4, 5 in steps 4040, 4041, 4042.

While timer 626 is measuring the given call time for the third time, group connection controller 625 newly retrieve the telephone numbers of telephone terminals which are present outside of range 2 but within range 3 shown in Fig. 14. In the illustrated present exemplary embodiment, group connection controller 625 searches for the telephone numbers of telephone terminals 203, 401.

When timer 626 completes the measurement of the given call time for the third time in step 4051, timer 626 sends a measurement completion notice to group connection controller 625, and starts measuring the given call time for the fourth time in step 4053.

Group connection controller 625 sends a group connection start signal including the newly retrieved telephone numbers of telephone terminals 203, 401 to telephone exchange 110 in step 4052.

Signals and a communication line which are involved in the connection between telephone terminal 102 and telephone terminal 203 will hereafter be assigned a suffix "6", and signals and a communication line which are involved in the connection between telephone terminal 102 and telephone terminal 401 will hereafter be assigned a suffix "7".

Then, telephone exchange 110 sends group connection request signals 6, 7 to transit exchange 500 in respective steps 4054, 4056, as in steps 2006, 2008 shown in Fig. 9.

Then, transit exchange 500 transfers group connection request signal 6 to telephone exchange 210 and transfers group connection request signal 7 to telephone exchange 410 in respective steps 4055, 4057, as in steps 2007, 2009 shown in Fig. 9.

When telephone exchange 210 receives group connection request signal 6 from transit exchange 500, connection requester 112 thereof ascertains whether or not telephone terminal 203 is idle. If telephone terminal 203 is idle, then connection requester 112 of telephone exchange 210 instructs caller 113 to start sending call signal 6 to telephone terminals 203, 102 in steps 4062, 4063, 4064, 4065, as in steps 2018, 2019, 2020, 2021 shown in Fig. 9.

When telephone exchange 410 receives group connection request signal 7 from transit exchange 500, connection requester 112 thereof ascertains whether or not telephone terminal 401 is idle. If telephone terminal 401 is idle, then connection requester 112 of telephone exchange 410 instructs caller 113 to start sending call signal 7 to telephone terminals 401, 102 in steps 4066, 4067, 4068, 4069, as in steps 2022, 2023, 2024, 2025 shown in Fig. 9.

While telephone exchanges 210, 410 are checking whether or not telephone terminals 203, 401 are idle, transit exchange 500 and telephone exchanges 110, 210, which have routed group connection request signal 6, establish communication line 6 and transit exchange 500 and telephone exchanges 110, 310, which have routed group connection request signal 7, establish communication line 7 in steps 4058, 4059, 4060, 4061.

Subsequently, group connection controller 625 expands the given area, searches for new neighboring telephone terminals in the expanded area, and sends information representative of the retrieved new neighboring telephone terminals to telephone exchange 110 each time the measurement of the given call time is completed until group connection controller 625 receives an incoming call response signal from telephone exchange 110.

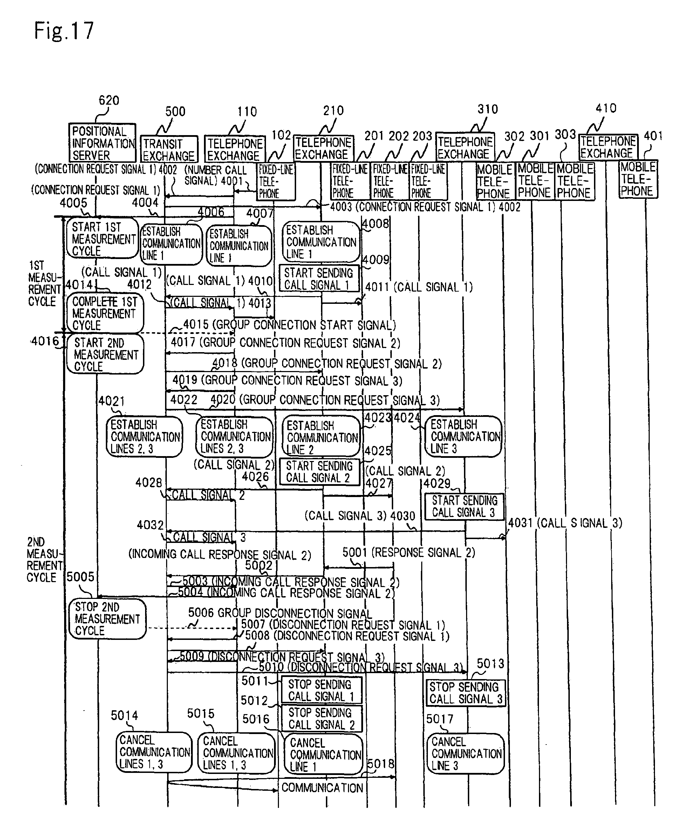

Another mode of operation in which telephone terminal 102 tries to make a call to telephone terminal 201 and in which telephone terminal 202 responds while timer 625 is measuring the given call time for the second time will be described below with reference to Fig. 17.

The operating sequence after telephone terminal 102 tries to make a call to telephone terminal 201 until call signals start being sent to telephone terminals 202, 302 (steps 4001 through 4032) is identical to the corresponding operating sequence shown in Fig. 16. The steps of this operating sequence and signals and the communication lines involved in these steps are denoted by identical reference numerals, and will not be described in detail below.

As shown in Fig. 17, when the user operates telephone terminal 202 to respond to call signal 2, telephone terminal 202 sends response signal 2 to telephone exchange 210 in step 5001.

Telephone exchange 210 sends incoming call response signal 2 to transit exchange 500 in step 5002, as with step 2028 shown in Fig. 9. At this time, incoming call responder 114 of telephone exchange 210 connects telephone terminal 202 to communication line 2 for connecting to telephone terminal 102.

Transit exchange 500 transfers incoming call response signal 2 to telephone exchange 110 in step 5003, as in step 2029 shown in Fig. 9.

Telephone exchange 110 transfers received incoming call response signal 2 to positional information server 610 in step 5004, as in step 2030 shown in Fig. 9. At this time, incoming call responder 114 of telephone exchange 110 connects telephone terminal 102 to communication line 2 for connecting to telephone terminal 202.

When group connection controller 625 of positional information server 620 receives incoming call response signal 2 from telephone exchange 110, group connection controller 625 instructs timer 626 to stop measuring the given call time in step 5005.

Positional information server 620 sends a group disconnection signal including the telephone numbers of telephone terminals 201, 302 to telephone exchange 110 in step 5006, as in step 2031 shown in Fig. 9.

Telephone exchange 110 sends disconnection request signals 1, 3 to transit exchange 500 in respective steps 5007, 5009, as in steps 2032, 2034 shown in Fig. 9.

Transit exchange 500 transfers disconnection request signal 1 to telephone exchange 210 and also transfers disconnection request signal 3 to telephone exchange 310 in steps 5008, 5010, as in steps 2033, 2035 shown in Fig. 9.

Then, telephone exchange 210 stops sending call signals 1, 2, and telephone exchange 310 stops sending call signal 3 in steps 5011, 5012, 5013, as in steps 2036, 2037, 2038 shown in Fig. 9.

Then, transit exchange 500 and telephone exchanges 110, 210 cancel communication line 1, and transit exchange 500 and telephone exchanges 110, 310 cancel communication line 3 in steps 5014, 5015, 5016, 1057, as in steps 2039, 2040, 2041, 2042 shown in Fig. 9.

Thereafter, telephone terminal 102 and telephone terminal 202 start communicating with each other through communication line 2 for the group connection.

According to the second exemplary embodiment, as described above, at the time that it is found that the called telephone terminal is in the disaster-affected area, positional information server 620 starts repeatedly measuring the given call time. When the measurement of the given call time is completed, positional information server 620 sends information representative of neighboring telephone terminals that are present in a given range based on the called telephone terminal, to telephone exchanges 110, 210, 310, 410. Subsequently, each time the measurement of the given call time is completed, positional information server 620 expands the given range, searches for new neighboring telephone terminals in the expanded range, and sends information representative of the retrieved new neighboring telephone terminals to telephone exchanges 110, 210, 310, 410.

Each time information representative of the retrieved new neighboring telephone terminals is sent to telephone exchanges which accommodate those retrieved new neighboring telephone terminals, the telephone exchanges send call signals to the retrieved new neighboring telephone terminals.

According to the second exemplary embodiment, therefore, the number of telephone terminals to which call signals are to be sent increases as time passes. Therefore, the telephone system according to the second exemplary embodiment can provide a higher possibility that emergency contact to confirm the safety of the called party in the disaster affected area will be made, than the telephone system according to the first exemplary embodiment, in addition to offering the same advantages as with the first exemplary embodiment.

After the measurement of the given call time is completed, information representative of neighboring telephone terminals that are present in the given range based on the called telephone terminal is sent to telephone exchanges 110, 210, 310, 410. If the called telephone terminal responds to the call signal while the given call time is being measured for the first time, then the telephone system according to the second exemplary embodiment needs only the same amount of resources used by the telephone exchange network as in the telephone system shown in Fig. 1. 3rd exemplary embodiment:

A telephone system according to a third exemplary embodiment is identical in configuration to the telephone system according to the second exemplary embodiment shown in Fig. 12. However, the telephone system according to the third exemplary embodiment is different from the telephone system according to the second exemplary embodiment in that positional information server 620 has additional operational details. Those configurational and operational details of the telephone system according to the third exemplary embodiment which are identical to those of the telephone system according to the second exemplary embodiment are denoted by identical reference numerals and will not be described below.

According to the third exemplary embodiment, each time measurement of the given call time is completed, group connection controller 625 of positional information server 620 indicates to telephone exchanges 110, 210, 310, 410 that the neighboring telephone terminals which have been indicated to telephone exchanges 110, 210, 310, 410 after the measurement of the given call time was completed for the preceding time are telephone terminals to be disconnected.

Operation of the telephone system according to the present exemplary embodiment will be described below. It is assumed that a major disaster has occurred and that the administrator of the telephone system has stored the positional information of the disaster-affected area as the particular area in positional information database 614.

First, as with the second exemplary embodiment, the mode of operation in which telephone terminals that are accommodated by telephone exchanges 110, 210, 310, 410 have the positional relationship shown in Fig. 14 and in which telephone terminal 102 tries to make a call to telephone terminal 201 will be described below.

Range 1 shown in Fig. 14 serves as a given range whose range information is stored in range information setting section 613. Range 2 shown in Fig. 14 is two times larger than range 1, and range 3 is three times larger than range 1.

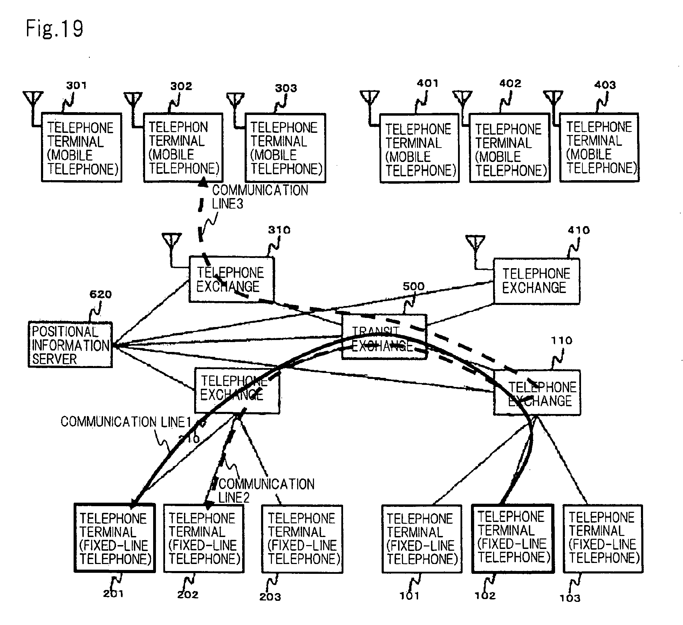

When telephone terminal (calling telephone terminal) 102 tries to make a call to telephone terminal (called telephone terminal) 201, timer 626 starts measuring the given call time for the first time, communication line 1 for connecting to telephone terminal 201 is established, and telephone terminal 102 starts sending a call signal to telephone terminal 201 (see Fig. 19).

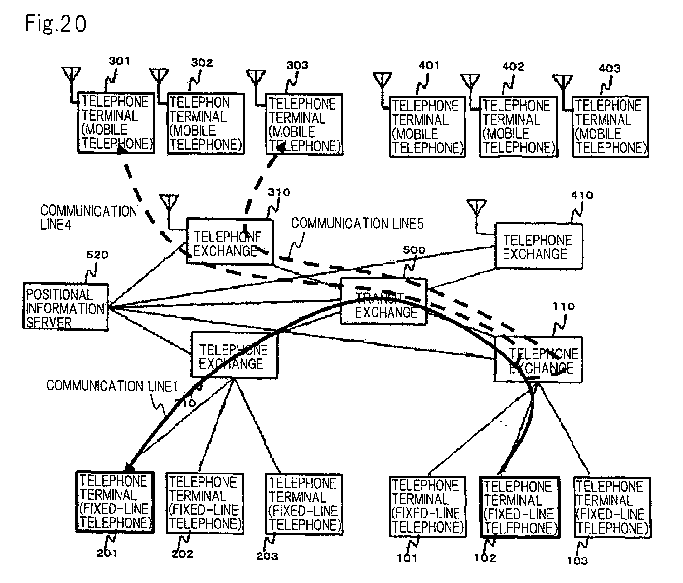

When the measurement of the given call time for the first time is completed, communication lines 2, 3 are established for connecting to telephone terminals (neighboring telephone terminals) 202, 302 that are present within range 1 shown in Fig. 14, and call signals start being sent to telephone terminals 202, 302 (see Fig. 20).

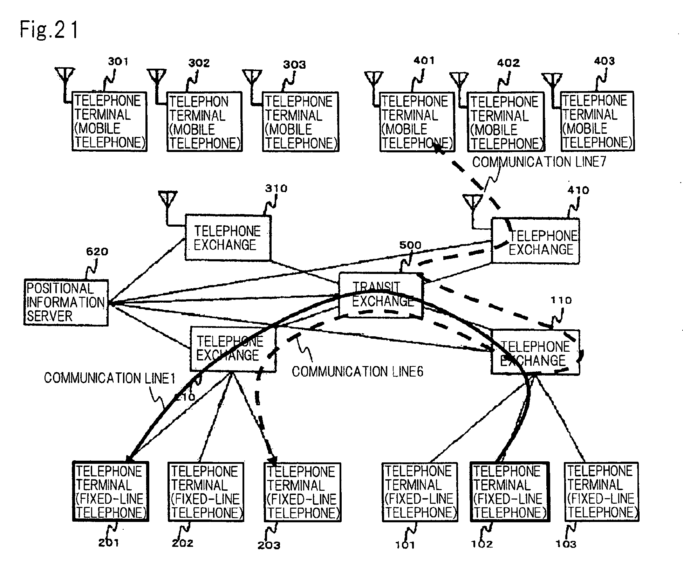

When measurement of the given call time for the second time is completed, communication lines 4, 5 are established for connecting to telephone terminals (neighboring telephone terminals) 301, 303 that are present outside of range 1 but within range 2 shown in Fig. 14, and call signals start being sent to telephone terminals 301, 303. At this time, the call signals stop being sent to telephone terminals 202, 302, and use of communication lines 2, 3 is discontinued (see Fig. 21).

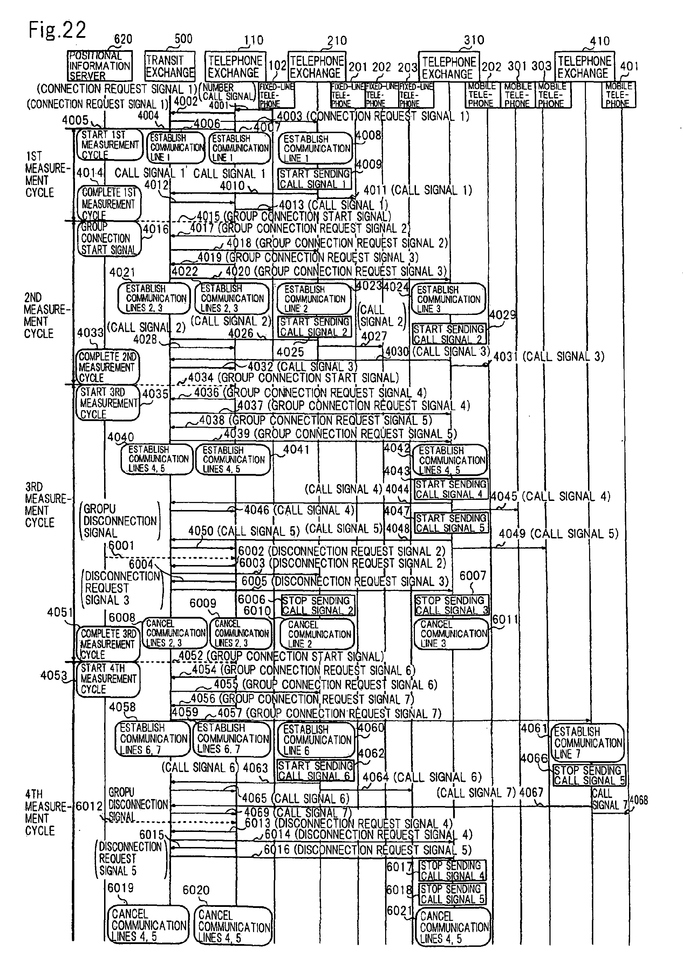

When measurement of the given call time for the third time is completed, communication lines 6, 7 are established for connecting to telephone terminals (neighboring telephone terminals) 203, 401 that are present outside of range 2 but within range 3 shown in Fig. 14, and call signals start being sent to telephone terminals 203, 401. At this time, the call signals stop being sent to telephone terminals 203, 401, and use of communication lines 4, 5 is discontinued (see Fig. 22).

Operation of the telephone system according to the third exemplary embodiment will be described below with reference to Fig. 22.

The operating sequence in which telephone terminal 102 tries to make a call to telephone terminal 201, in which communication line 1 is established, and in which call signal 1 starts being sent to telephone terminal 201 (steps 4001 through 4013), the operating sequence in which the measurement of the given call time for the first time is completed, in which communication lines 2, 3 are established, and in which call signals 2, 3 start being sent to telephone terminals 202, 302 (steps 4014 through 4032), and the operating sequence in which the measurement of the given call time for the second time is completed, in which communication lines 4, 5 are established, and in which call signals 4, 5 start being sent to telephone terminals 301, 303 (steps 4033 through 4050) are identical to the corresponding operating sequences according to the second exemplary embodiment shown in Fig. 16. The steps of these operating sequences and signals and the communication lines involved in these steps are denoted by identical reference numerals, and will not be described in detail below.

As shown in Fig. 22, when timer 626 completes measuring the given call time for the second time, group connection controller 625 of positional information server 620 sends a group disconnection signal including the telephone numbers of telephone terminals 202, 302 that are included in the previously sent group connection start signal, to telephone exchange 110 in step 6001.

Telephone exchange 110 sends disconnection request signals 2, 3 to transit exchange 500 in respective steps 6002, 6004, as in steps 2032, 2034 shown in Fig. 9.

Transit exchange 500 transfers disconnection request signal 2 to telephone exchange 210 and also transfers disconnection request signal 3 to telephone exchange 310 in steps 6003, 6005, as in steps 2033, 2035 shown in Fig. 9.

Then, telephone exchange 210 stops sending call signal 2, and telephone exchange 310 stops sending call signal 3 in steps 6006, 6007, as in steps 2036, 2037, 2038 shown in Fig. 9.

Then, transit exchange 500 and telephone exchanges 110, 210 cancel communication line 2, and transit exchange 500 and telephone exchanges 110, 310 cancel communication line 3 in steps 6008, 6009, 6010, 6011, as in steps 2039, 2040, 2041, 2042 shown in Fig. 9.

While timer 626 is measuring the given call time for the third time, group connection controller 625 of positional information server 620 searches for telephone terminals that are present outside of range 2 but within range 3 shown in Fig. 14, as in the second exemplary embodiment. In the illustrated exemplary embodiment, telephone terminals 203, 401 are newly searched for.

When timer 626 completes measuring the given call time for the third time, it sends a measurement completion signal to group connection controller 625.

The operating sequence in which timer 626 starts measuring the given call time for the fourth time, in which communication lines 6, 7 are established, and in which call signals 6, 7 start being sent to telephone terminals 203, 401 (steps 4051 through 4069) is identical to the corresponding operating sequence according to the second exemplary embodiment shown in Fig. 16. The steps of this operating sequence and signals and the communication lines involved in these steps are denoted by identical reference numerals, and will not be described in detail below.

When timer 626 completes measuring the given call time for the third time, group connection controller 625 sends a group disconnection signal including the telephone numbers of telephone terminals 301, 303 that are included in the previously sent group connection start signal, to telephone exchange 110 in step 6012.

Telephone exchange 110 sends disconnection request signals 4, 5 to transit exchange 500 in respective steps 6013, 6015, as in steps 2032, 2034 shown in Fig. 9.

Transit exchange 500 transfers disconnection request signals 4, 5 to telephone exchange 310 in steps 6014, 6016, as in steps 2033, 2035 shown in Fig. 9.

Then, telephone exchange 310 stops sending call signals 4, 5 in steps 6017, 6018, as with steps 2036, 2037, 2038 shown in Fig. 9.

Then, transit exchange 500 and telephone exchanges 110, 310 cancel communication lines 4, 5 in steps 6008, 6009, 6010, 6010, as in steps 2039, 2040, 2041, 2042 shown in Fig. 9.

Thereafter, group connection controller 625 expands the given area, searches for new neighboring telephone terminals in the expanded area, and sends information representative of the retrieved new neighboring telephone terminals to telephone exchange 110, each time measurement of the given call time is completed until group connection controller 625 receives an incoming call response signal from telephone exchange 110, and controller 625 also sends information representative of the neighboring telephone terminals, which are indicated after the measurement of the given call time for the preceding time was completed, as telephone terminals to be disconnected.

The operating sequence at the time the neighboring telephone terminals have responded according to the third exemplary embodiment is the same as the corresponding operating sequence according to the second exemplary embodiment shown in Fig. 17, and will not be described in detail below.

According to the third exemplary embodiment, as described above, each time the measurement of the given call time is completed, positional information server 620 sends information representative of newly retrieved neighboring telephone terminals to telephone exchanges 110, 210, 310, 410, and also sends information representative of the neighboring telephone terminals, which are indicated after the measurement of the given call time was completed for the preceding time, as telephone terminals to be disconnected.

Consequently, each time neighboring telephone terminals and telephone terminals to be disconnected are indicated from positional information server 620, the telephone exchanges which accommodate the neighboring telephone terminals send call signals to the neighboring telephone terminals, and the telephone exchanges which accommodate the telephone terminals to be disconnected stop sending call signals to the telephone terminals to be disconnected and cancel corresponding communication lines.

According to the third exemplary embodiment, therefore, the telephone system can provide a higher possibility that emergency contact to confirm the safety of the called party in the disaster affected area will be made while minimizing use of the telephone exchange network resources, than the telephone system according to the second exemplary embodiment, in addition to offering the same advantages as with the second exemplary embodiment.

### 4th exemplary embodiment:

A telephone system according to a fourth exemplary embodiment is different from the telephone systems according to the first, second, and third exemplary embodiments in that even while a calling telephone terminal is communicating with a neighboring telephone terminal, telephone exchanges 110, 210, 310, 410 continuously send a call signal to a called telephone terminal, and when the called telephone terminal responds to the call signal, telephone exchanges 110, 210, 310, 410 change the telephone terminal connected to the calling telephone terminal to the called telephone terminal.

The above changes in the operation of telephone exchanges 110, 210, 310, 410 as they are reflected in the first exemplary embodiment will be described below. The above changes in the operation of telephone exchanges 110, 210, 310, 410 may also be reflected in the other exemplary embodiments.

The telephone system according to the fourth exemplary embodiment is identical in configuration to the telephone system according to the first exemplary embodiment shown in Fig. 4. However, the telephone system according to the fourth exemplary embodiment is different from the telephone system according to the first exemplary embodiment as regards the operation of positional information server 610 and telephone exchanges 110,210,310,410.

First, operational details of positional information server 610 which are different from those of positional information server 610 according to the first exemplary embodiment will be described below.

According to the fourth exemplary embodiment, when group connection controller 615 of positional information server 610 receives an incoming call response signal from telephone exchanges 110, 210, 310, 410, group connection controller 615 notifies the telephone number of a telephone terminal to which a call signal is sent, other than the telephone terminal which has responded and the called telephone terminal, as the telephone number of a telephone terminal to be disconnected, to telephone exchanges 110, 210, 310, 410.

Furthermore, while a calling telephone terminal is communicating with a neighboring telephone terminal, when group connection controller 615 receives an incoming call response signal indicating that the called telephone terminal has responded from telephone exchanges 110, 210, 310, 410, group connection controller 615 indicates the telephone number of the neighboring telephone terminal, as the telephone number of a telephone terminal to be disconnected, to telephone exchanges 110, 210, 310, 410 in order to cancel the communication line which connects the calling telephone terminal and the neighboring telephone terminal.

Operational details of telephone exchanges 110, 210, 310, 410 which are different from those of telephone exchanges 110, 210, 310, 410 according to the first exemplary embodiment will be described below. Though only the operational details of telephone exchange 110 will be described below, other telephone exchanges 210, 310, 410 are identical in operation to telephone exchange 110.

While a calling telephone terminal is communicating with a neighboring telephone terminal, when incoming call responder 114 of telephone exchange 110 receives an incoming call response signal indicating that the called telephone terminal has responded from another telephone exchange, incoming call responder 114 changes the telephone terminal connected to the calling telephone terminal to the called telephone terminal.

Operation of the telephone system according to the present exemplary embodiment will be described below. It is assumed that a major disaster has occurred and that the administrator of the telephone system has stored the positional information of the disaster-affected area as the particular area in positional information database 614.

First, a mode of operation in which telephone terminals accommodated by telephone exchanges 110, 210, 310, 410 have the positional relationship shown in Fig. 7 and in which telephone terminal (calling telephone terminal) 102 tries to make a call to telephone terminal (called telephone terminal) 201, in which call signals are also sent to telephone terminals (neighboring telephone terminals) 202, 302, and in which telephone terminal 201 responds while telephone terminal 102 and telephone terminal 202 are communicating with each other, will be described below.

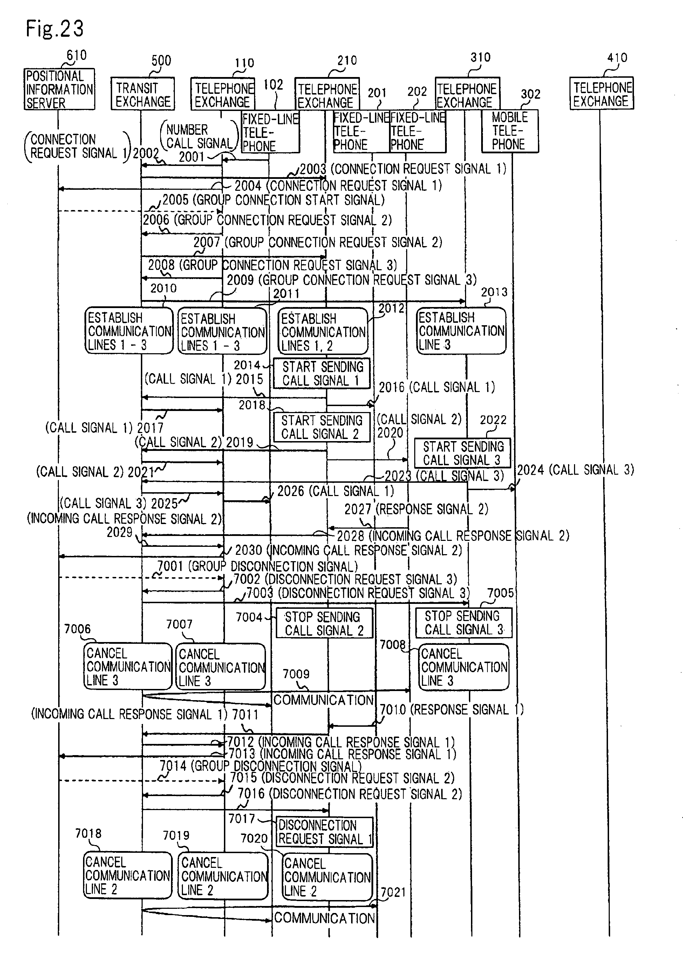

Operation of the telephone system according to the fourth exemplary embodiment will be described below with reference to Fig. 23.

The operating sequence in which telephone terminal 102 tries to make a call to telephone terminal 201, in which communication lines 1, 3 are established, and in which call signals 1, 2, 3 start being sent to telephone terminals 201, 202, 302 (steps 2001 through 2026), and in which the operating sequence in which telephone terminal 202 responds to call signal 2, and in which telephone exchange 110 transfers incoming call response signal 2 to positional information server 610 (steps 2027 through 2030) are identical to the corresponding operating sequences according to the first exemplary embodiment shown in Fig. 9. The steps of these operating sequences and signals and communication lines involved in these steps are denoted by identical reference numerals, and will not be described in detail below.

As shown in Fig. 23, when group connection controller 615 of positional information server 610 receives incoming call response signal 2 from telephone exchange 110, group connection controller 615 sends a group disconnection signal including the telephone number of telephone terminal 301 to which a call signal is sent, other than telephone terminal 202 and telephone terminal 201, to telephone exchange 110 in step 7001.

Then, telephone exchange 110 sends disconnection request signal 3 to transit exchange 500 in step 7002, as in step 2034 shown in Fig. 9.

At this time, incoming call responder 114 of telephone exchange 110 connects telephone terminal 102 to communication line 2 for connecting to telephone terminal 202.

Transit exchange 500 transfers disconnection request signal 3 to telephone exchange 310 in step 7003, as in step 2035 shown in Fig. 9.

Then, telephone exchange 310 stops sending call signal 3 in step 7005, as in step 2038 shown in Fig. 9.

Then, transit exchange 500 and telephone exchanges 110, 310 disconnect communication line 3 in steps 7006, 7007, 7008, as with steps 2039, 2040, 2041, 2042 shown in Fig. 9.

Incoming call responder 114 of telephone exchange 210 connects telephone terminal 202 to communication line 2 for connecting to telephone terminal 102. At this time, incoming call responder 114 instructs caller 113 to stop sending call signal 2 in step 7004.

In step 7009, telephone terminal 102 and telephone terminal 202 start communicating with each other through the group connection.

At this time, telephone exchange 210 continues to send call signal 1 to telephone terminal 201, and has been establishing communication line 1. Therefore, even while telephone terminal 102 and telephone terminal 202 are communicating with each other, telephone terminal 201 is able to respond to call signal 1.

When the user of telephone terminal 201 takes steps to respond to call signal 1, telephone terminal 201 sends response signal 1 to telephone exchange 210 in step 7010.

Telephone exchange 210 sends incoming call response signal 1 to transit exchange 500 in step 7011, as in step 2027 shown in Fig. 9.

Then, transit exchange 500 transfers incoming call response signal 1 to telephone exchange 110 in step 7012, as in step 2028 shown in Fig. 9.

Then, telephone exchange 110 transfers incoming call response signal 1 to positional information server 610 in step 7013, as in step 2029 shown in Fig. 9.

At this time, incoming call responder 114 of telephone exchange 110 changes the communication line connected to telephone terminal 102 from communication line 2 for connecting to telephone terminal 202 to communication line 1 for connecting to telephone terminal 201.

When group connection controller 615 receives incoming call response signal 1 from telephone exchange 110, group connection controller 615 sends a group disconnection signal including the telephone number of telephone terminal 202 to telephone exchange 110 in step 7014.

Telephone exchange 110 sends disconnection request signal 2 to transit exchange 500 in step 7015, as in step 2032 shown in Fig. 9.

Then, transit exchange 500 transfers disconnection request signal 2 to telephone exchange 210 in step 7016, as in step 2033 shown in Fig. 9.

Telephone exchange 210 stops sending call signal 1 in step 7017, as in step 2037 shown in Fig. 9.

Transit exchange 500 and telephone exchanges 110, 210 disconnect communication line 2 in steps 7018, 7019, 7020, as in steps 2039, 2040, 2041 shown in Fig. 9.

Thereafter, telephone terminal 102 and telephone terminal 201 start communicating with each other through the normal connection in step 7021.

At this time, if communication through the group connection is suddenly cut off, then the user of telephone terminal 202 who has responded to call signal 2 may possibly be confused. To avoid such confusion, caller 113 of telephone exchange 210 may send to telephone terminal 202 a message indicating that telephone terminal 201 that is to be connected to telephone terminal 102 through the normal connection has responded.

Similarly, if communication through the group connection suddenly changes to communication through the normal connection, the calling party may possibly be confused. To avoid such confusion, caller 113 of telephone exchange 110 may send to telephone terminal 102 a message indicating that the telephone terminal connected through the group connection will change to the telephone terminal connected through the normal connection.

Consequently, telephone terminal users are prevented from experiencing any confusion which would otherwise be caused if communication through the group connection is suddenly cut off or if communication through the group connection suddenly changes to communication through the normal connection.

In the present exemplary embodiment, as described above, while a calling telephone terminal is communicating with a neighboring telephone terminal, when telephone exchanges 110, 210, 310, 410 receive an incoming call response signal indicating that the called telephone terminal has responded, telephone exchanges 110, 210, 310, 410 change the communication line connected to the calling telephone terminal to the communication line for connecting to the called telephone terminal.

According to the fourth exemplary embodiment, therefore, even while a calling telephone terminal is communicating with a neighboring telephone terminal, when the called telephone terminal has responded to the call signal, the telephone system is cable of changing communication with the calling telephone terminal to communication with the called telephone terminal, in addition to offering the same advantages as with the first through third exemplary embodiments.

### 5th exemplary embodiment:

A telephone system according to a fifth exemplary embodiment is different from the telephone systems according to the first, second, and third exemplary embodiments in that each telephone exchange sends those connection request signals that are to be sent to one other telephone exchange, as one connection request signal, and establishes one communication line if a communication lines has not already been established between itself and the other telephone exchange to which the connection request signal is to be sent.

The above changes in the operation of each of the telephone exchanges as they are reflected in the first exemplary embodiment will be described below. The above changes in the operation of each of the telephone exchanges may also be reflected in the other exemplary embodiments.

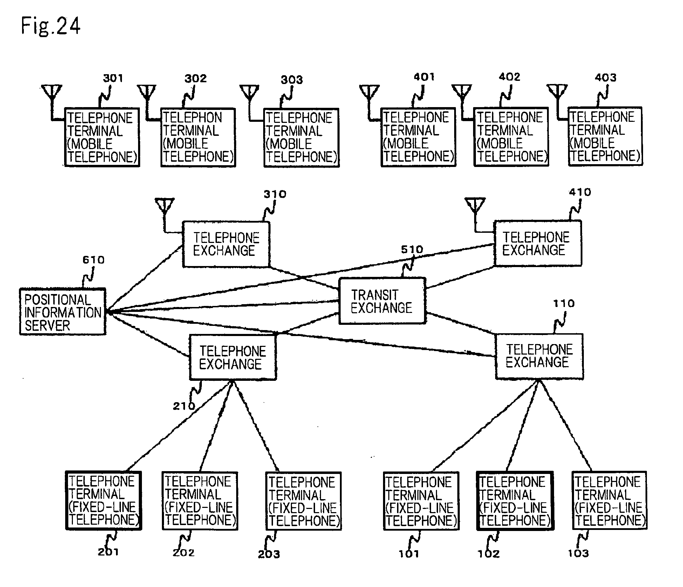

Fig. 24 shows the configuration of the telephone system according to the fifth exemplary embodiment of the present invention.

The telephone system according to the fifth exemplary embodiment is different from the telephone system according to the first exemplary embodiment shown in Fig. 4 in that telephone exchanges 110, 210, 310, 410 have different operational details and transit exchange 510 is provided instead of transit exchange 500. Those configurational and operational details of the telephone system according to the fifth exemplary embodiment which are identical to those of the telephone system according to the first exemplary embodiment are denoted by identical reference numerals and will not be described below.

First, operational details of telephone exchanges 110, 210, 310, 410 which are different from those of telephone exchanges 110, 210, 310, 410 according to the first exemplary embodiment will be described below. Though only the operational details of telephone exchange 110 will be described below, other telephone exchanges 210, 310, 410 are identical in operation to telephone exchange 110.

When telephone exchange 110 receives a call from a calling telephone terminal, connection requester 112 thereof indicates the telephone number of the called telephone terminal to positional information server 610. At this time, connection requester 112 does not send a connection request signal for the called telephone terminal to the other telephone exchanges.

When positional information server 610 indicates the telephone numbers of neighboring telephone terminals to connection requester 112, connection requester 112 sends connection request signals to the called telephone terminal and the neighboring telephone terminals whose telephone numbers have been indicated. At this time, connection requester 112 sends those connection request signals that are to be sent to one other telephone exchange, as one connection request signal. In the present exemplary embodiment, telephone exchange 110 sends all connection request signals to transit exchange 510. Therefore, telephone exchange 110 sends connection request signals including the telephone number of the called telephone terminal and the telephone numbers of the neighboring telephone terminals which have been indicated from positional information server 610, to transit exchange 510.

When connection requester 112 receives connection request signals including the telephone numbers of a plurality of telephone terminals from another telephone exchange, connection requester 112 instructs caller 113 to start sending call signals to the telephone terminals included in the connection request signals.

If a communication line between telephone exchange 110 and another telephone exchange to which a connection request signal is to be sent has not been established, then connection requester 112 establishes a communication line between the other telephone exchange and communicator 111.

Operational details of transit exchange 510 which are different from those of transit exchange 500 according to the first exemplary embodiment will be described below.

When transit exchange 510 receives connection request signals including the telephone numbers of a plurality of telephone terminals from telephone exchanges, transit exchange 510 puts together the telephone numbers of the telephone terminals included in the connection request signals for each of other telephone exchanges, and sends the connection request signals including the telephone numbers of the telephone terminals accommodated by the other telephone exchanges to the other telephone exchanges.

If a communication line between telephone exchange 110 and another telephone exchange to which a connection request signal is to be sent has not been established, then transit exchange 510 establishes one communication line therebetween.

Operation of the telephone system according to the present exemplary embodiment will be described below. It is assumed that a major disaster has occurred and that the administrator of the telephone system has stored the positional information of the disaster-affected area as the particular area in positional information database 614.

A mode of operation in which telephone terminals accommodated by telephone exchanges 110, 210, 310, 410 have the positional relationship shown in Fig. 7, as in the first exemplary embodiment and telephone terminal 102, try to make a call to telephone terminal 201 will be described below.

When telephone terminal (calling telephone terminal) 102 tries to make a call to telephone terminal (called telephone terminal) 201, call signals also start being sent to telephone terminals (neighboring telephone terminals) 202, 302. At this time, according to the present exemplary embodiment, only one communication line between exchanges in each pair has been established.

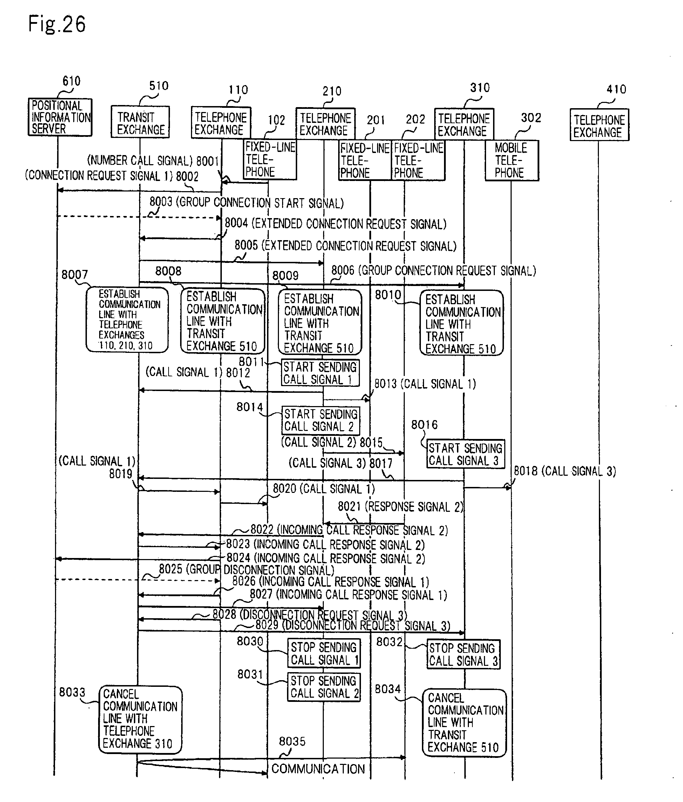

Operation of the telephone system at this time will be described below with reference to a flowchart shown in Fig. 26.

Those operational details of the telephone system according to the fifth exemplary embodiment which are identical to those of the telephone system according to the first exemplary embodiment will not be described below.

As shown in Fig. 26, when the user operates telephone terminal 102 to make a call specifying the telephone number of telephone terminal 201, telephone terminal 102 sends number call signal 1 including the telephone number of telephone terminal 201 to telephone exchange 110 in step 8001.

When telephone exchange 110 receives number call signal 1 from telephone terminal 102, telephone exchange 110 sends connection request signal 1 including the telephone number of telephone terminal 201 to positional information server 610 in step 8002.

When positional information server 610 receives connection request signal 1 from telephone exchange 110, group connection controller 615 thereof determines whether or not telephone terminal 201 is in the disaster-affected area.

If telephone terminal 201 is not in the disaster-affected area, then group connection controller 615 sends a signal indicating that telephone terminal 201 is not in the disaster-affected area to telephone exchange 110.

When telephone exchange 110 receives the signal indicating that telephone terminal 201 is not in the disaster-affected area from positional information server 610, connection requester 112 thereof sends connection request signal 1 including the telephone number of telephone terminal 201 to transit exchange 510.

Thereafter, the telephone system operates in the same manner as the general telephone system shown in Fig. 3 to establish communication line 1 and to start sending call signal 1 to telephone terminal 201.

If telephone terminal 201 is in the disaster-affected area, then group connection controller 615 sends a group connection request signal including the telephone numbers of telephone terminals 202, 302 that are present in range 1 shown in Fig. 7 to telephone exchange 110 in step 8003.

When telephone exchange 110 receives the group connection request signal from positional information server 610, connection requester 112 thereof sends a connection request signal (extended connection request signal) including the telephone numbers of telephone terminals 202, 302 which are to be connected to establish for a group connection and the telephone number of telephone terminal 201 which is to be connected to establish for a normal connection, to transit exchange 510. A connection request signal including a plurality of telephone numbers will be referred to as an extended connection request signal.

When transit exchange 510 receives the extended connection request signal from telephone exchange 110, transit exchange 510 determines telephone exchanges which accommodate the telephone terminals based on the telephone numbers included in the extended connection request signal.

Then, transit exchange 510 generates an extended connection request signal including the telephone numbers of telephone terminals 201, 202 and sends the generated extended connection request signal to telephone exchange 210 which accommodates telephone terminals 201, 202 in step 8005.

Transit exchange 510 generates a group connection request signal including the telephone number of telephone terminal 302 and sends the generated group connection request signal to telephone exchange 310 which accommodates telephone terminal 302 in step 8006.

When telephone exchange 210 receives the extended connection request signal from transit exchange 510, telephone exchange 210 ascertains whether or not telephone terminals 201, 202 are idle.

When telephone exchange 310 receives the group connection request signal from transit exchange 510, telephone exchange 310 ascertains whether or not telephone terminal 302 is idle.

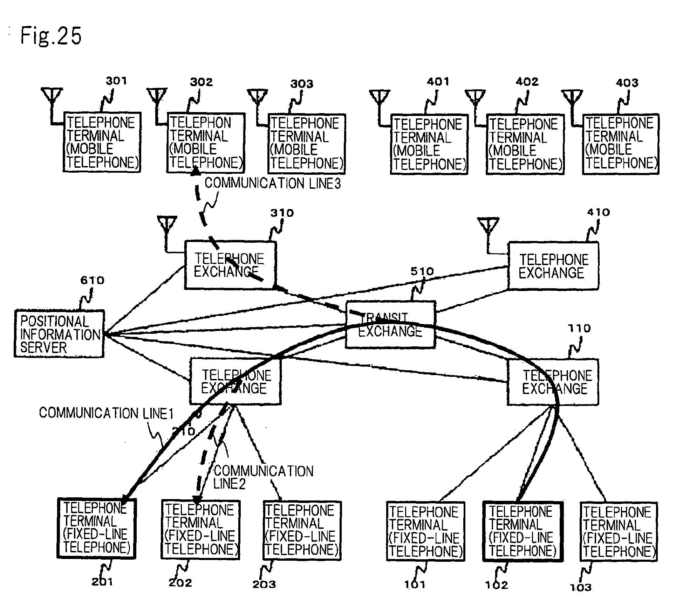

During this time, transit exchange 510 and telephone exchanges 110, 210, 310 which have routed the extended connection request signal or the group connection request signal, establish one communication line between themselves and other exchanges in steps 8007, 8008, 8009, 8010, 8011. In the present exemplary embodiment shown in Fig. 25, one communication line is established between telephone exchange 110 and transit exchange 510, one communication line is established between transit exchange 510 and telephone exchange 210, and one communication line is established between transit exchange 510 and telephone exchange 310.

If telephone terminal 201 is idle, then connection requester 112 of telephone exchange 210 instructs caller 113 to start sending call signals 1 to telephone terminals 201, 102 in steps 8011, 8012, 8013.

If telephone terminal 202 is idle, then connection requester 112 of telephone exchange 210 instructs caller 113 thereof to start sending call signals 2 to telephone terminals 202, 102 in steps 8014, 8015.

At this time, since only one communication line established between telephone exchange 210 and transit exchange 510 has been established, if both telephone terminals 201, 202 are idle, then caller 113 of telephone exchange 210 sends call signal 1 for telephone terminal 201 which is the called telephone terminal to transit exchange 510.

If telephone terminal 302 is idle, then connection requester 112 of telephone exchange 310 instructs caller 113 thereof to start sending call signals 3 to telephone terminals 302, 102 in steps 8016, 8017, 8018.

When transit exchange 510 receives the call signal from telephone exchange 210 or 310, transit exchange 510 transfers the received call signal to telephone exchange 110. At this time, since only one communication line established between telephone exchange 110 and transit exchange 510 has been established, if transit exchange 510 receives call signals from both telephone exchanges 210, 310, then transit exchange 510 preferentially transfers the call signal that has been sent from telephone exchange 210 which accommodates telephone terminal 201 which is the called telephone terminal, to telephone exchange 110 in step 8019.

When telephone exchange 110 receives the call signal from transit exchange 510, caller 113 thereof transfers the received call signal to telephone terminal 102 in step 8020.

When the user operates telephone terminal 202 to respond to call signal 2, telephone terminal 202 sends response signal 2 to telephone exchange 210.

Telephone exchange 210 sends incoming call response signal 2 to transit exchange 510 in step 8021, as in step 2028 shown in Fig. 9. At this time, incoming call responder 114 of telephone exchange 210 connects telephone terminal 201 to the communication line.

Then, transit exchange 510 transfers incoming call response signal 2 to telephone exchange 110 in step 8022, as in step 2029 shown in Fig. 9.

Then, telephone exchange 110 sends incoming call response signal 2 to positional information server 610 in step 8023, as in step 2030 shown in Fig. 9. At this time, incoming call responder 114 of telephone exchange 110 connects telephone terminal 102 to the communication line.

Positional information server 620 sends a group disconnection signal including the telephone numbers of telephone terminals 201, 302 to telephone exchange 110 in step 8025, as in step 2031 shown in Fig. 9.

Then, telephone exchange 110 sends disconnection request signals 1, 3 to transit exchange 510 in steps 8026, 8028, as in steps 2032, 3034 shown in Fig. 9.

Then, transit exchange 510 transfers disconnection request signal 1 to telephone exchange 210 and also transfers disconnection request signal 3 to telephone exchange 310 in respective steps 8027, 8029, as in steps 2033, 2035 shown in Fig. 9.

Then, telephone exchange 210 stops sending call signals 1, 2 and telephone exchange 310 stops sending call signal 3 in respective steps 8030, 8031, 8032, as in steps 2036, 2037, 2038 shown in Fig. 9.

Then, transit exchange 510 and telephone exchange 310 disconnect unnecessary communication lines in steps 8033, 8034.

Thereafter, telephone terminal 102 and telephone terminal 202 start communicating with each other in step 8035.

If the changes in the operation of the telephone exchanges according to the present exemplary embodiment are reflected in the second or third exemplary embodiment, then each time the measurement of the given call time is completed, telephone exchanges 110, 210, 310, 410 need to send connection request signals to neighboring telephone terminals indicated by the positional information server. In this case, since each telephone exchange establishes a communication line for sending a connection request signal to another telephone exchange if no communication line has been established between itself and the other telephone exchange, only one communication line needs to be established between exchanges in each pair.

According to the present exemplary embodiment, as described above, each telephone exchange puts together those connection request signals that are to be sent to one other telephone exchange, as one connection request signal, and sends the one connection request signal. Furthermore, each telephone exchange establishes one communication line if a communication line between itself and the other telephone exchange to which the connection request signal is to be sent has not been established.

Consequently, one communication line is established between exchanges in each pair.

The telephone system according to the fifth exemplary embodiment is capable of minimizing use of the resources of the telephone exchange network, in addition to offering the same advantages as with the first through third exemplary embodiments.

An exemplary advantages of the present invention will be described below.

If the called telephone terminal is in the disaster-affected area, then the positional information server searches for neighboring telephone terminals that are present in the given range based on the called telephone terminal, and telephone exchanges which accommodate the called telephone terminal and the neighboring telephone terminals send call signals to the called telephone terminal and the neighboring telephone terminals.

Therefore, since the call signals are sent to the neighboring telephone terminals as well as the called telephone terminal, the possibility for making emergency contact to confirm the safety of the called party in the disaster-affected area is increased.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Example 1 describes a telephone system comprising:
a plurality of telephone terminals;
a telephone network having a plurality of telephone exchanges accommodating said telephone terminals;
positional information storage means for storing positional information of said telephone terminals;
determining means for being notified by one of said telephone exchanges which has received the call from said calling telephone terminal, of a called telephone terminal, which is one of said telephone terminals called by a call from a calling telephone terminal, which is one of said telephone terminals, searching said positional information storage means for the positional information of said called telephone terminal, and determining whether or not said called telephone terminal is present in a particular area based on the positional information retrieved from said positional information storage means; and
indicating means for, if said called telephone terminal is present in the particular area, retrieving one of said telephone terminals which is present in a predetermined range based on said called telephone terminal, as a neighboring telephone terminal, based on the positional information stored in said positional information storage means, and indicating the retrieved telephone terminal to said one of the telephone exchanges;
wherein each of said telephone exchanges comprises:
connection requesting means for sending a connection request signal to another one of the telephone exchanges to request that a connection be made between said called telephone terminal and said neighboring telephone terminal; and
calling means for receiving a connection request signal from another one of the telephone exchanges and sending a call signal to one of the telephone terminals concerning which a request that a connection be established is made by said connection request signal.

Example 2 describes the telephone system according to example 1, further comprising:
timer means for measuring a predetermined call time;
wherein said indicating means instructs said timer means to measure said predetermined call time repeatedly when it is judged that said called telephone terminal is present in said particular area, searches for said neighboring telephone terminal, and when said timer means completes measuring said predetermined call time, indicates the retrieved neighboring telephone terminal to the telephone exchange, and subsequently, each time said timer means completes measuring said predetermined call time, expands said predetermined range, newly searches for said neighboring telephone terminal in the expanded range, and indicates the newly retrieved neighboring telephone terminal to the telephone exchange; and
wherein each time said connection requesting means is notified of the neighboring telephone terminal by said indicating means, said connection requesting means sends a connection request signal to the other telephone exchange to request that a connection be made to the notified neighboring telephone terminal.

Example 3 describes the telephone system according to example 1 or 2, wherein said connection requesting means establishes a communication line between the telephone exchange and the other telephone exchange to which said connection request signal is sent, for connecting the telephone terminal, concerning which said connection request signal has made a request that a connection be made, and said calling telephone terminal to each other.

Example 4 describes the telephone system according to example 3, wherein each time said timer means completes measuring said predetermined call time, said indicating means indicates to the telephone exchange that the neighboring telephone terminal, which is indicated to the telephone exchange when said timer unit completes measuring said predetermined call time in a preceding cycle, is a telephone terminal which is to be disconnected;
wherein said telephone exchange further comprises disconnecting means for sending a disconnection request signal for making a request to the other telephone exchange that said telephone terminal be disconnected, and when said telephone exchange receives a disconnection request signal from another one of the telephone exchanges, canceling a communication line established between the telephone terminal which is to be disconnected and said calling telephone terminal; and
wherein when said calling means receives a disconnection request signal from another one of the telephone exchanges, stops sending a call signal to the telephone terminal which is to be disconnected concerning which a request for disconnection was made by said disconnection request signal.

Example 5 describes the telephone system according to example 3 or 4, wherein said telephone exchange comprises:
incoming call responding means for sending an incoming call response signal indicating that said called telephone terminal has responded to another one of the telephone exchanges, and when said telephone exchange receives an incoming call response signal from another one of the telephone exchanges while said calling telephone terminal and said neighboring telephone terminal are communicating with each other, changing the communication line connected to said calling telephone terminal to the communication line established between the telephone exchange and said called telephone terminal.

Example 6 describes the telephone system according to example 1, wherein said connection requesting means combines together connection request signals to be sent to another one of the telephone exchanges as one connection request signal, sends said one connection request signal, and establishes one communication line if a communication line between the telephone exchange and the other telephone exchange to which the connection request signal is to be sent has not been established.

Example 7 describes a positional information server connected to a telephone network having a plurality of telephone exchanges accommodating a plurality of telephone terminals, comprising:
determining means for being notified by one of said telephone exchanges which has received the call from said calling telephone terminal, of a called telephone terminal, which is one of said telephone terminals called by a call from a calling telephone terminal, which is one of said telephone terminals, searching a positional information storage which stores positional information of the telephone terminals for the positional information of said called telephone terminal, and determining whether or not said called telephone terminal is present in a particular area based on the positional information retrieved from said positional information storage; and
indicating means for, if said called telephone terminal is present in the particular area, retrieving one of said telephone terminals which is present in a predetermined range based on said called telephone terminal as a neighboring telephone terminal, based on the positional information stored in said positional information storage, indicating the retrieved telephone terminal to said one of the telephone exchanges, and instructing said one of the telephone exchanges to send a call signal to said neighboring telephone terminal.

Example 8 describes the positional information server according to example 7, further comprising:
timer means for measuring a predetermined call time;
wherein said indicating means instructs said timer means to measure said predetermined call time repeatedly when it is judged that said called telephone terminal is present in said particular area, searches for said neighboring telephone terminal, and when said timer means completes measuring said predetermined call time, indicates the retrieved neighboring telephone terminal to the telephone exchange, and subsequently, each time said timer means completes measuring said predetermined call time, expands said predetermined range, newly searches for said neighboring telephone terminal in the expanded range, and indicates the newly retrieved neighboring telephone terminal to the telephone exchange.

Example 9 describes the positional information server according to example 8, wherein each time said timer means completes measuring said predetermined call time, said indicating means instructs said telephone exchange to stop sending a call signal to the neighboring telephone terminal which is indicated to the telephone exchange when said timer means completes measuring said predetermined call time in a preceding cycle.

Example 10 describes a telephone exchange connected to a positional information server and accommodating a plurality of telephone terminals, comprising:
connection requesting means for receiving a call from a calling telephone terminal, which is one of said telephone terminals, and sending, to another telephone exchange, a connection request signal to request that a connection be made between a called telephone terminal, which is one of said telephone terminals called by the call from the calling telephone terminal, and a neighboring telephone terminal, which is one of said telephone terminals that is present in a predetermined range based on said called telephone terminal which is indicated by said positional information server; and
calling means for receiving a connection request signal from another telephone exchange and sending a call signal to one of the telephone terminals concerning which a request for connection was made by said connection request signal.

Example 11 describes the telephone exchange according to example 10, wherein said connection requesting means receives the call from said calling telephone terminal, indicates said called telephone terminal to said positional information server, sends a connection request signal for requesting said called telephone terminal to be connected to another telephone exchange, and when notified of said neighboring telephone terminal by said positional information server, sends a connection request signal to request that said neighboring telephone terminal be connected to another telephone exchange.

Example 12 describes the telephone exchange according to example 11, wherein said connection requesting means establishes a communication line between the telephone exchange and the other telephone exchange to which said connection request signal is sent, for connecting the telephone terminal, concerning which said connection request signal has made a request that a connection be made, and said calling telephone terminal to each other.

Example 13 describes the telephone exchange according to example 12, further comprising:
disconnecting means for, each time a telephone terminal which is to be disconnected is indicated to the telephone exchange by said positional information server, sending a disconnection request signal to the other telephone exchange to request that said telephone terminal be disconnected, and when said telephone exchange receives a disconnection request signal from another telephone exchange, canceling a communication line established between the to-be-disconnected telephone terminal and said calling telephone terminal; and
wherein when said calling means receives a disconnection request signal from another telephone exchange, stops sending a call signal to the telephone terminal which is to be disconnected concerning which a request for disconnection was made by said disconnection request signal.

Example 14 describes the telephone exchange according to example 12 or 13, further comprising:
incoming call responding means for sending an incoming call response signal indicating that said called telephone terminal has responded to another telephone exchange, and when said telephone exchange receives an incoming call response signal from another telephone exchange while said calling telephone terminal and said neighboring telephone terminal are communicating with each other, changing the communication line connected to said calling telephone terminal to the communication line established between the telephone exchange and said called telephone terminal.

Example 15 describes the telephone exchange according to example 10, wherein said connection requesting means receives the call from said calling telephone terminal, indicates said called telephone terminal to said positional information server, and when notified of said neighboring telephone terminal by said positional information server, sends a connection request signal to request that a connection be made between said called telephone terminal and said neighboring telephone terminal to another telephone exchange.

Example 16 describes the telephone exchange according to example 15, wherein said connection requesting means combines together connection request signals to be sent to one other telephone exchange as one connection request signal, sends said one connection request signal, and establishes one communication line if a communication line between the telephone exchange and the other telephone exchange to which the connection request signal is to be sent has not been established.

Example 17 describes a method of controlling a telephone system to be carried out by a positional information server connected to a telephone network having a plurality of telephone exchanges accommodating a plurality of telephone terminals, comprising:
being notified by one of said telephone exchanges which has received the call from said calling telephone terminal, of a called telephone terminal, which is one of said telephone terminals called by a call from a calling telephone terminal, which is one of said telephone terminals, searching a positional information storage which stores positional information of the telephone terminals for the positional information of said called telephone terminal, and determining whether or not said called telephone terminal is present in a particular area based on the positional information retrieved from said positional information storage; and
if said called telephone terminal is present in the particular area, retrieving one of said telephone terminals which is present in a predetermined range based on said called telephone terminal as a neighboring telephone terminal, based on the positional information stored in said positional information storage, indicating the retrieved telephone terminal to said one of the telephone exchanges, and instructing said one of the telephone exchanges to send a call signal to said neighboring telephone terminal.

Example 18 describes the method according to example 17, wherein said instructing comprises:
instructing a timer to measure a predetermined call time repeatedly when it is judged that said called telephone terminal is present in a particular area, searching for said neighboring telephone terminal, and when said timer completes measuring said predetermined call time, indicating the retrieved neighboring telephone terminal to the telephone exchange, and subsequently, each time said timer completes measuring said predetermined call time, expanding said predetermined range, newly searching for said neighboring telephone terminal in the expanded range, and indicating the newly retrieved neighboring telephone terminal to the telephone exchange.

Example 19 describes a method according to example 18, further comprising:
each time said timer means completes measuring said predetermined call time, instructing said telephone exchange to stop sending a call signal to the neighboring telephone terminal which is indicated to the telephone exchange when said timer completes measuring said predetermined call time in a preceding cycle.

Example 20 describes a method of controlling a telephone system to be carried out by a telephone exchange connected to a positional information server and accommodating a plurality of telephone terminals, comprising:
receiving a call from a calling telephone terminal, which is one of said telephone terminals, and sending, to another telephone exchange, a connection request signal to request that a connection be made between a called telephone terminal, which is one of said telephone terminals called by the call from the calling telephone terminal, and a neighboring telephone terminal, which is one of said telephone terminals that is present in a predetermined range based on said called telephone terminal which is indicated by said positional information server; and
receiving a connection request signal from another telephone exchange and sending a call signal to one of the telephone terminals concerning which said connection request signal has requested that a connection be made.

Example 21 describes the method according to example 20, further comprising:
receiving the call from said calling telephone terminal, and indicating said called telephone terminal to said positional information server;
wherein said sending said connection request signal comprises sending a connection request signal to request that said called telephone terminal be connected to another telephone exchange, and when notified of said neighboring telephone terminal by said positional information server, sending a connection request signal to another telephone exchange to request that said neighboring telephone terminal be connected.

Example 22 describes the method according to example 21, further comprising:
establishing a communication line between the telephone exchange and the other telephone exchange to which said connection request signal is sent, for connecting the telephone terminal, concerning which said connection request signal has made a request that a connection be made, and said calling telephone terminal to each other.

Example 23 describes the method according to example 22, further comprising:
each time a telephone terminal which is to be disconnected is indicated to the telephone exchange by said positional information server, sending a disconnection request signal to the other telephone exchange to request disconnection from said telephone terminal which is to be disconnected;
when said telephone exchange receives a disconnection request signal from another telephone exchange, canceling a communication line established between the to-be-disconnected telephone terminal and said calling telephone terminal; and
when said telephone exchange receives a disconnection request signal from another telephone exchange, stopping sending a call signal to the telephone terminal that is to be disconnected, said disconnection request signal having made the request to disconnect telephone terminal.

Example 24 describes the method according to example 22 or 23, further comprising:
sending an incoming call response signal indicating that said called telephone terminal has responded to another telephone exchange, and when said telephone exchange receives an incoming call response signal from another telephone exchange while said calling telephone terminal and said neighboring telephone terminal are communicating with each other, changing the communication line connected to said calling telephone terminal to the communication line established between the telephone exchange and said called telephone terminal.

Example 25 describes the method according to example 20, further comprising:
receiving the call from said calling telephone terminal and indicating said called telephone terminal to said positional information server;
wherein said sending said connection request signal comprises combining together connection request signals to be sent to one other telephone exchange, as one connection request signal, sending said one connection request signal, and establishing one communication line if a communication line between the telephone exchange and the other telephone exchange to which the connection request signal is to be sent has not been established.

## Claims

1. A telephone system comprising:
a plurality of telephone terminals;
a telephone network having a plurality of telephone exchanges accommodating said telephone terminals;
positional information storage means for storing positional information of said telephone terminals;
determining means for being notified by one of said telephone exchanges which has received the call from said calling telephone terminal, of a called telephone terminal, which is one of said telephone terminals called by a call from a calling telephone terminal, which is one of said telephone terminals, searching said positional information storage means for the positional information of said called telephone terminal, and determining whether or not said called telephone terminal is present in a particular area based on the positional information retrieved from said positional information storage means; and
indicating means for, if said called telephone terminal is present in the particular area, retrieving one of said telephone terminals which is present in a predetermined range based on said called telephone terminal, as a neighboring telephone terminal, based on the positional information stored in said positional information storage means, and indicating the retrieved telephone terminal to said one of the telephone exchanges;
wherein each of said telephone exchanges comprises:
connection requesting means for sending a connection request signal to another one of the telephone exchanges to request that a connection be made between said called telephone terminal and said neighboring telephone terminal; and
calling means for receiving a connection request signal from another one of the telephone exchanges and sending a call signal to one of the telephone terminals concerning which a request that a connection be established is made by said connection request signal.

2. The telephone system according to claim 1, further comprising:
timer means for measuring a predetermined call time;
wherein said indicating means instructs said timer means to measure said predetermined call time repeatedly when it is judged that said called telephone terminal is present in said particular area, searches for said neighboring telephone terminal, and when said timer means completes measuring said predetermined call time, indicates the retrieved neighboring telephone terminal to the telephone exchange, and subsequently, each time said timer means completes measuring said predetermined call time, expands said predetermined range, newly searches for said neighboring telephone terminal in the expanded range, and indicates the newly retrieved neighboring telephone terminal to the telephone exchange; and
wherein each time said connection requesting means is notified of the neighboring telephone terminal by said indicating means, said connection requesting means sends a connection request signal to the other telephone exchange to request that a connection be made to the notified neighboring telephone terminal.

3. The telephone system according to claim 1 or 2, wherein said connection requesting means establishes a communication line between the telephone exchange and the other telephone exchange to which said connection request signal is sent, for connecting the telephone terminal, concerning which said connection request signal has made a request that a connection be made, and said calling telephone terminal to each other.

4. The telephone system according to claim 3, wherein each time said timer means completes measuring said predetermined call time, said indicating means indicates to the telephone exchange that the neighboring telephone terminal, which is indicated to the telephone exchange when said timer unit completes measuring said predetermined call time in a preceding cycle, is a telephone terminal which is to be disconnected;
wherein said telephone exchange further comprises disconnecting means for sending a disconnection request signal for making a request to the other telephone exchange that said telephone terminal be disconnected, and when said telephone exchange receives a disconnection request signal from another one of the telephone exchanges, canceling a communication line established between the telephone terminal which is to be disconnected and said calling telephone terminal; and
wherein when said calling means receives a disconnection request signal from another one of the telephone exchanges, stops sending a call signal to the telephone terminal which is to be disconnected concerning which a request for disconnection was made by said disconnection request signal.

5. The telephone system according to claim 3 or 4, wherein said telephone exchange comprises:
incoming call responding means for sending an incoming call response signal indicating that said called telephone terminal has responded to another one of the telephone exchanges, and when said telephone exchange receives an incoming call response signal from another one of the telephone exchanges while said calling telephone terminal and said neighboring telephone terminal are communicating with each other, changing the communication line connected to said calling telephone terminal to the communication line established between the telephone exchange and said called telephone terminal.

6. The telephone system according to claim 1, wherein said connection requesting means combines together connection request signals to be sent to another one of the telephone exchanges as one connection request signal, sends said one connection request signal, and establishes one communication line if a communication line between the telephone exchange and the other telephone exchange to which the connection request signal is to be sent has not been established.

7. A positional information server connected to a telephone network having a plurality of telephone exchanges accommodating a plurality of telephone terminals, comprising:
determining means for being notified by one of said telephone exchanges which has received the call from said calling telephone terminal, of a called telephone terminal, which is one of said telephone terminals called by a call from a calling telephone terminal, which is one of said telephone terminals, searching a positional information storage which stores positional information of the telephone terminals for the positional information of said called telephone terminal, and determining whether or not said called telephone terminal is present in a particular area based on the positional information retrieved from said positional information storage; and
indicating means for, if said called telephone terminal is present in the particular area, retrieving one of said telephone terminals which is present in a predetermined range based on said called telephone terminal as a neighboring telephone terminal, based on the positional information stored in said positional information storage, indicating the retrieved telephone terminal to said one of the telephone exchanges, and instructing said one of the telephone exchanges to send a call signal to said neighboring telephone terminal.

8. The positional information server according to claim 7, further comprising:
timer means for measuring a predetermined call time;
wherein said indicating means instructs said timer means to measure said predetermined call time repeatedly when it is judged that said called telephone terminal is present in said particular area, searches for said neighboring telephone terminal, and when said timer means completes measuring said predetermined call time, indicates the retrieved neighboring telephone terminal to the telephone exchange, and subsequently, each time said timer means completes measuring said predetermined call time, expands said predetermined range, newly searches for said neighboring telephone terminal in the expanded range, and indicates the newly retrieved neighboring telephone terminal to the telephone exchange.

9. The positional information server according to claim 8, wherein each time said timer means completes measuring said predetermined call time, said indicating means instructs said telephone exchange to stop sending a call signal to the neighboring telephone terminal which is indicated to the telephone exchange when said timer means completes measuring said predetermined call time in a preceding cycle.

10. A telephone exchange connected to a positional information server and accommodating a plurality of telephone terminals, comprising:
connection requesting means for receiving a call from a calling telephone terminal, which is one of said telephone terminals, and sending, to another telephone exchange, a connection request signal to request that a connection be made between a called telephone terminal, which is one of said telephone terminals called by the call from the calling telephone terminal, and a neighboring telephone terminal, which is one of said telephone terminals that is present in a predetermined range based on said called telephone terminal which is indicated by said positional information server; and
calling means for receiving a connection request signal from another telephone exchange and sending a call signal to one of the telephone terminals concerning which a request for connection was made by said connection request signal.

11. The telephone exchange according to claim 10, wherein said connection requesting means receives the call from said calling telephone terminal, indicates said called telephone terminal to said positional information server, sends a connection request signal for requesting said called telephone terminal to be connected to another telephone exchange, and when notified of said neighboring telephone terminal by said positional information server, sends a connection request signal to request that said neighboring telephone terminal be connected to another telephone exchange.

12. The telephone exchange according to claim 11, wherein said connection requesting means establishes a communication line between the telephone exchange and the other telephone exchange to which said connection request signal is sent, for connecting the telephone terminal, concerning which said connection request signal has made a request that a connection be made, and said calling telephone terminal to each other.

13. The telephone exchange according to claim 12, further comprising:
disconnecting means for, each time a telephone terminal which is to be disconnected is indicated to the telephone exchange by said positional information server, sending a disconnection request signal to the other telephone exchange to request that said telephone terminal be disconnected, and when said telephone exchange receives a disconnection request signal from another telephone exchange, canceling a communication line established between the to-be-disconnected telephone terminal and said calling telephone terminal; and
wherein when said calling means receives a disconnection request signal from another telephone exchange, stops sending a call signal to the telephone terminal which is to be disconnected concerning which a request for disconnection was made by said disconnection request signal.

14. The telephone exchange according to claim 12 or 13, further comprising:
incoming call responding means for sending an incoming call response signal indicating that said called telephone terminal has responded to another telephone exchange, and when said telephone exchange receives an incoming call response signal from another telephone exchange while said calling telephone terminal and said neighboring telephone terminal are communicating with each other, changing the communication line connected to said calling telephone terminal to the communication line established between the telephone exchange and said called telephone terminal.

15. The telephone exchange according to claim 10, wherein said connection requesting means receives the call from said calling telephone terminal, indicates said called telephone terminal to said positional information server, and when notified of said neighboring telephone terminal by said positional information server, sends a connection request signal to request that a connection be made between said called telephone terminal and said neighboring telephone terminal to another telephone exchange.

16. The telephone exchange according to claim 15, wherein said connection requesting means combines together connection request signals to be sent to one other telephone exchange as one connection request signal, sends said one connection request signal, and establishes one communication line if a communication line between the telephone exchange and the other telephone exchange to which the connection request signal is to be sent has not been established.

17. A method of controlling a telephone system to be carried out by a positional information server connected to a telephone network having a plurality of telephone exchanges accommodating a plurality of telephone terminals, comprising:
being notified by one of said telephone exchanges which has received the call from said calling telephone terminal, of a called telephone terminal, which is one of said telephone terminals called by a call from a calling telephone terminal, which is one of said telephone terminals, searching a positional information storage which stores positional information of the telephone terminals for the positional information of said called telephone terminal, and determining whether or not said called telephone terminal is present in a particular area based on the positional information retrieved from said positional information storage; and
if said called telephone terminal is present in the particular area, retrieving one of said telephone terminals which is present in a predetermined range based on said called telephone terminal as a neighboring telephone terminal, based on the positional information stored in said positional information storage, indicating the retrieved telephone terminal to said one of the telephone exchanges, and instructing said one of the telephone exchanges to send a call signal to said neighboring telephone terminal.

18. The method according to claim 17, wherein said instructing comprises:
instructing a timer to measure a predetermined call time repeatedly when it is judged that said called telephone terminal is present in a particular area, searching for said neighboring telephone terminal, and when said timer completes measuring said predetermined call time, indicating the retrieved neighboring telephone terminal to the telephone exchange, and
subsequently, each time said timer completes measuring said predetermined call time, expanding said predetermined range, newly searching for said neighboring telephone terminal in the expanded range, and indicating the newly retrieved neighboring telephone terminal to the telephone exchange.

19. A method according to claim 18, further comprising:
each time said timer means completes measuring said predetermined call time, instructing said telephone exchange to stop sending a call signal to the neighboring telephone terminal which is indicated to the telephone exchange when said timer completes measuring said predetermined call time in a preceding cycle.

20. A method of controlling a telephone system to be carried out by a telephone exchange connected to a positional information server and accommodating a plurality of telephone terminals, comprising:
receiving a call from a calling telephone terminal, which is one of said telephone terminals, and sending, to another telephone exchange, a connection request signal to request that a connection be made between a called telephone terminal, which is one of said telephone terminals called by the call from the calling telephone terminal, and a neighboring telephone terminal, which is one of said telephone terminals that is present in a predetermined range based on said called telephone terminal which is indicated by said positional information server; and
receiving a connection request signal from another telephone exchange and sending a call signal to one of the telephone terminals concerning which said connection request signal has requested that a connection be made.

21. The method according to claim 20, further comprising:
receiving the call from said calling telephone terminal, and indicating said called telephone terminal to said positional information server;
wherein said sending said connection request signal comprises sending a connection request signal to request that said called telephone terminal be connected to another telephone exchange, and when notified of said neighboring telephone terminal by said positional information server, sending a connection request signal to another telephone exchange to request that said neighboring telephone terminal be connected.

22. The method according to claim 21, further comprising:
establishing a communication line between the telephone exchange and the other telephone exchange to which said connection request signal is sent, for connecting the telephone terminal, concerning which said connection request signal has made a request that a connection be made, and said calling telephone terminal to each other.

23. The method according to claim 22, further comprising:
each time a telephone terminal which is to be disconnected is indicated to the telephone exchange by said positional information server, sending a disconnection request signal to the other telephone exchange to request disconnection from said telephone terminal which is to be disconnected;
when said telephone exchange receives a disconnection request signal from another telephone exchange, canceling a communication line established between the to-be-disconnected telephone terminal and said calling telephone terminal; and
when said telephone exchange receives a disconnection request signal from another telephone exchange, stopping sending a call signal to the telephone terminal that is to be disconnected, said disconnection request signal having made the request to disconnect telephone terminal.

24. The method according to claim 22 or 23, further comprising:
sending an incoming call response signal indicating that said called telephone terminal has responded to another telephone exchange, and when said telephone exchange receives an incoming call response signal from another telephone exchange while said calling telephone terminal and said neighboring telephone terminal are communicating with each other, changing the communication line connected to said calling telephone terminal to the communication line established between the telephone exchange and said called telephone terminal.

25. The method according to claim 20, further comprising:
receiving the call from said calling telephone terminal and indicating said called telephone terminal to said positional information server;
wherein said sending said connection request signal comprises combining together connection request signals to be sent to one other telephone exchange, as one connection request signal, sending said one connection request signal, and establishing one communication line if a communication line between the telephone exchange and the other telephone exchange to which the connection request signal is to be sent has not been established.
